# EUROPEAN PATENT APPLICATION

(11) **EP 2 602 844 A1**
(43) Date of publication of application: **12.06.2013**
(21) Application number: 11814433.6
(22) Date of filing: 14.07.2011
(51) Int. Cl.: H01M 2/16

(54) **SEPARATOR FOR ALKALINE BATTERY, AND ALKALINE BATTERY**

(30) Priority: 04.08.2010 JP 2010175675
(71) Applicant: Nippon Kodoshi Corporation, Kochi-shi Kochi 7810395 (JP)
(72) Inventor: KUBO Yoshiyo, Kochi-shi Kochi 781-0395 (JP); OGAWA Kentarou, Kochi-shi Kochi 781-0395 (JP); NAKAJIMA Osamu, Kochi-shi Kochi 781-0395 (JP)
(74) Representative: Betten & Resch
(86) International application number: PCT/JP2011/066140
(87) International publication number: WO 2012/017803

(57) **Abstract**

An object of the present invention is to provide a separator for alkaline battery and an alkaline battery capable of reducing the internal resistance of the alkaline battery so as to improve the heavy load discharge performance. The separator for alkaline battery is a separator for separating a positive electrode active material and a negative electrode active material of the alkaline battery from each other, the separator containing 40% or more by weight of cellulose fibers, and 0.05% to 0.5% by weight of polyamine-epichlorohydrin resin in terms of resin solid content. The alkaline battery has its positive electrode active material and negative electrode active material separated from each other by the separator.

## Description

### Technical Field

The present invention relates to a separator for alkaline battery used in an alkaline battery whose negative electrode active material is zinc, such as an alkaline manganese battery, a nickel-zinc battery, a silver oxide battery, a zinc air battery or the like, and an alkaline battery that uses the separator, for purpose of reducing the internal resistance of an alkaline battery (particularly a small alkaline battery such as the small alkaline batteries LR6, LR03 and the like) so as to improve the heavy load discharge performance.

### Background Art

Conventionally, as characteristics required for a separator adapted for separating the positive electrode active material and the negative electrode active material of an alkaline battery from each other, it is required that such separator can prevent the positive electrode active material and the negative electrode active material from being contacted with each other, can prevent internal short-circuit caused by acicular crystals (i.e., dendrites) of the zinc oxide generated due to discharge of the negative electrode, has durability against contraction and deterioration with respect to the electrolyte (such as potassium hydroxide or the like) and the positive electrode active material (such as manganese dioxide, nickel oxyhydroxide, silver oxide or the like), does not prevent ion conduction, and the like. Further, there is a possibility that, due to the impact caused when the alkaline battery is transported or dropped down, the separator inside the battery might be broken so as to cause internal short-circuit, and therefore the separator is required to keep a sufficient mechanical strength.

Particularly, in recent years, the alkaline manganese battery is increasingly being used in video cameras, portable video equipment, digital cameras, game machines, remote controls and the like, and further; since the performance of these machines is enhanced, the alkaline manganese battery is required to supply large current, so that heavy load discharge characteristics become important. Thus, in order to reduce the internal resistance of the alkaline manganese battery, the separator is required to have further reduced electrical resistance.

A mixed paper made from a blended material containing synthetic fibers and cellulose fibers is used as the separator for alkaline battery, wherein the blended material is obtained by blending rayon fibers, linter pulp, mercerized wood pulp, polynosic fibers, lyocell fibers and the like (all these are cellulose fibers having good alkali-resistance) into a major component such as vinylon fibers and nylon fibers (as alkali-resistant synthetic fibers), and then adding 10 % to 20% by weight of readily-soluble polyvinyl alcohol fibers (which dissolve in hot water of 60°C to 90°C). When producing the conventional separator, the beatable cellulose fibers, such as the aforesaid linter pulp and the like, are subjected to a beating process according to necessity to thereby form fine fibrils from fiber bodies, so that density of the separator is increased, and shielding performance of the separator is improved.

For example, the applicant of the present application has provided a separator for alkaline battery (see Patent Document 1) which is produced by mixing beatable alkali-resistant cellulose fibers (such as mercerized pulp, polynosic fibers and/or the like) and synthetic fibers with each other and performing paper-making process with the mixed fibers by using a binder (such as polyvinyl alcohol fibers or the like) to bind the fibers, so as to obtain the separator for alkaline battery which contains 10% to 50% by weight of alkali-resistant cellulose fibers, wherein the beating degree of the alkali-resistant cellulose fiber falls within a range of 500 ml to 0 ml CSF (Canadian Standard Freeness, JIS P8121).

As another example, it is provided a separator for alkaline battery which is obtained by blending polyvinyl alcohol fibers of 1 denier or less (as substantive major fibers) and a polyvinyl alcohol fiber-like binder into fibrillated cellulose fibers obtained by dissolving cellulose in a solvent and directly depositing cellulose, wherein dissolution temperature of the fiber-like binder in water falls within a range of 60°C to 98°C (see Patent Document 2). The cellulose fibers disclosed in Patent Document 2 are solvent spun cellulose fibers obtained by dry/wet spinning a spinning solution in water, wherein the spinning solution is obtained by dissolving cellulose into amine oxide, and are regenerated cellulose fibers now known as "lyocell" as a generic name. Thus, the separator disclosed in Patent Document 2 is obtained by blending vinylon fiber of 1 denier or less and a polyvinyl alcohol fiber-like binder into beaten and fibrillated lyocell fibers.

Further, the applicant of the present application has provided a separator for alkaline battery, in which alkali-treated pulp containing cellulose I and cellulose II is used as the raw material of the separator, so that the separator has smaller thickness, less deterioration against the positive electrode active material within the battery, higher density, higher airtightness, and better short-circuit prevention effect. To be specific, the separator has a thickness of 15µm to 60µm, an airtightness of 10 min/100ml to 800 min/100ml (see Patent Document 3).

Further, in the history of developing the separator for alkaline battery (in 1977), the applicant of the present application has provided a separator for alkaline dry battery obtained by performing paper-making process with a mercerized wood pulp alone, or by performing paper-making process with a mixed material obtained by adding at least one material selected from a group consisting of synthetic fibers, synthetic resin pulp, and alkali-resistant resin into the mercerized wood pulp so that the content of the mercerized wood pulp is 50% or more by weight (see Patent Document 4). Patent Document 4 discloses examples and comparative examples in which polyamide-polyamine-epichlorohydrin resin (trade name: Kymene 557; manufactured by DIC-Hercules chemicals Inc.), as alkali-resistant resin, is added to the separator. Incidentally, the "polyamide-polyamine-epichlorohydrin resin" disclosed in Patent Document 4 now is also simply referred to as "polyamide epichlorohydrin resin".

### Prior art documents

### Patent documents

Patent Document 1: Japanese Patent Publication No. H02-119049
Patent Document 2: Japanese Patent Publication No. H06-163024
Patent Document 3: Japanese Patent Publication No. 2006-4844
Patent Document 4: Japanese Patent Publication No. S54-87824

### Disclosure of the Invention

### Problems to be Solved by the Invention

As described in Patent Documents 1 and 2, most conventional separators for alkaline batteries are the ones in which readily-soluble polyvinyl alcohol fibers (which dissolve in hot water of 60°C to 90°C) are added as a binder for binding the intersection points of the fibers so as to improve the dry strength and wet strength, wherein the content of the readily-soluble polyvinyl alcohol fibers is 10 % to 20% by weight with respect to the weight of the separator. The readily-soluble polyvinyl alcohol fibers are mixed with other raw fibers to make a wet paper; due to the heat generated in the drying process of the wet paper, the readily-soluble polyvinyl alcohol fibers are dissolved in the water contained in the wet paper so as to become polyvinyl alcohol resin, and the polyvinyl alcohol resin is dissolved between the synthetic fibers and the cellulose fibers of the wet paper as so to spread between fibers. Thereafter, with progression of dry, the water evaporates from the wet paper, so that the polyvinyl alcohol resin spread between fibers to cause the intersection points of the fibers to bind to each other. In such a manner, since the fibers are bound to each other by the polyvinyl alcohol resin, the strength of the separator in the dry state can be increased. Further, since the polyvinyl alcohol resin is difficult to dissolve in the alkaline electrolyte, the polyvinyl alcohol resin also helps to maintain the wet strength of the separator in the electrolyte.

However, on the one hand, since the polyvinyl alcohol resin dissolved in the drying process of the paper-making process spreads between fibers, the void of the separator will be filled up and thereby a large number of pores will be plugged, so that the electrical resistance of the separator will unnecessarily increase, and that is a problem. Further, as a problem in the stage of paper-making process, when the dissolved polyvinyl alcohol resin is dried, the separator will be bound to the surface of the dryer by the polyvinyl alcohol resin. Thus, when performing the paper-making process of a separator into which the readily-soluble polyvinyl alcohol fibers are blended, it is necessary to take a measure so that the separator can be easily separated from the surface of the dryer, wherein examples of such measure include coating a Teflon (registered trademark) film on the surface of the dryer, periodically coating a separating agent on the surface of the dryer, and the like.

Further, the beating degree of the cellulose fibers blended into the separator is also associated with the increase of the electrical resistance of the separator. With the separator having high density and high airtightness disclosed in Patent Document 3, necessary strength can be obtained by forming hydrogen-bonding between fibrillated cellulose fibers which are fibrillated by performing high beating process to a level of 50 ml to 0 ml CSF, without having to add a binder such as the readily-soluble polyvinyl alcohol fiber, which results in increased electrical resistance. As a result, since the thickness of the separator can be reduced, when being incorporated into the alkaline battery, the volume of the separator inside the alkaline battery can be reduced, and therefore the electrical characteristics (such as increasing of the active material of the both electrodes, improving of the heavy load discharge performance, increasing of the electrical capacitance, reduction of the internal resistance, and the like) can be improved.

If the readily-soluble polyvinyl alcohol fibers are blended into the high airtight separator described in Patent Document 3 made from high beaten cellulose fibers, the electrical resistance of the separator will dramatically increase, so that the heavy load discharge characteristics will be inevitably degraded even if the thickness of the separator is reduced to 15 to 60 µm. In other words, in the case where highly fibrillated cellulose fibers with small CSF value are blended into the separator, due to the effect of fibrillation, a dense separator having small pore diameter can be obtained. Further, since fibrillated cellulose fibers tend to bind to each other by themselves due to hydrogen-bonding, the density of the separator is also increased. Thus, in the separator obtained in the aforesaid manner, since the void is reduced, and further, since the polyvinyl alcohol resin dissolved in the void spreads to fill up the void, the electrical resistance of the separator is significantly increased compared with the case where cellulose fibers with low beating degree and large CSF value are used. Further, since the highly fibrillated cellulose fibers have large water-holding capacity of wet paper when performing paper-making process, the readily-soluble polyvinyl alcohol fibers tend to dissolve and spread between fibers.

Incidentally, even if the density of the separator is increased by blending the highly fibrillated cellulose fibers described in Patent Document 3 to increase the airtightness of the separator, the following problems inherent in the drying process of the paper-making process remain unsolved. To be specific, when using a dryer to heat-dry the separator having large airtightness, the water vapor generated from the separator abutting the surface of the dryer is difficult to penetrate through the separator. Thus, due to the generated water vapor, the separator partially floats from the surface of the dryer, so that the separator will have inadequate dried portion. Further, even if the inadequate dried portion can be dried thereafter, such portion will have larger thickness compared with the portion that was in close contact with the surface of the dryer, so that it is impossible to obtain a homogeneous separator. Thus, when drying a large separator having high density and high airtightness, the separator needs to be dried while being pressed toward the surface of the dryer. To be specific, as the method generally used in a Fourdrinier paper machine, the separator is dried while being pressed by a dryer felt, a dryer canvas or the like. In such a manner, since the separator is pressed, the separator can be prevented from floating from the surface of the dryer by the water vapor.

Thus, when blending the readily-soluble polyvinyl alcohol fibers into the high beaten high-airtight separator described in Patent Document 3 to make a wet separator, and then holding down the wet separator by a dryer felt or the like to try to dry the separator, the separator will be bound to the surface of the dryer by the dissolved polyvinyl alcohol resin. Further, even if the separator can be separated from the surface of the dryer, since the separator is bound to the dryer felt on the opposite side, it is impossible to perform paper-making process.

Thus, the readily-soluble polyvinyl alcohol fiber is a material which has excellent binding function as a binder, and which also helps to maintain not only the strength of the separator in dry state but also the wet strength of the separator in the electrolyte. However, at the same time, since the dissolved polyvinyl alcohol resin fills up the void of the separator and therefore plugs a large number of pores, the electrical resistance of the separator will increase, and that is a problem having negative effect on the heavy load discharge characteristics of the alkaline battery. In other words, when the electrical resistance of the separator increases, the internal resistance of the alkaline battery that uses the separator will increase, and therefore the heavy load discharge characteristics of the alkaline battery will be degraded. Thus, it is not possible to exploit the advantages of the readily-soluble polyvinyl alcohol fibers to obtain a separator for alkaline battery capable of reducing the internal resistance of the alkaline battery so as to improve the heavy load discharge performance.

On the other hand, as described in Patent Document 4, the polyamide-polyamine-epichlorohydrin resin (as an alkali-resistant resin) added to the separator is a cationic watersoluble resin known as a wet strength agent of paper, and the polyamide-polyamine-epichlorohydrin resin can self-colonize the surface of anionic cellulose fibers simply by being added to raw slurry liquid containing the cellulose fibers and performing paper-making process. Due to the heat generated in the drying process of paper, the colonized resin reacts with the hydroxyl groups of the cellulose fibers and the other fibers blended thereinto and to further form cross-links between fibers, and thereby the wet strength of the obtained paper can be increased.

Since the added polyamide-polyamine-epichlorohydrin resin selectively colonizes the surface of the anionic cellulose fibers, the separator can obtain sufficient wet strength by a small additive amount (1% or less by weight) of the polyamide-polyamine-epichlorohydrin resin. Further, since the polyamide-polyamine-epichlorohydrin resin can bind the intersection points of the fibers to each other by very small additive amount, compared with the additive amount (10% to 20% by weight) of the readily-soluble polyvinyl alcohol fiber, and further, since, unlike the readily-soluble polyvinyl alcohol fiber, the polyamide-polyamine-epichlorohydrin resin does not dissolve and spread between fibers of the separator so as to fill up the void of the separator and plug the pores, the electrical resistance of the separator is unlikely to increase.

However, the polyamide-polyamine-epichlorohydrin resin does not necessarily have sufficient alkali-resistant to be used as a separator for alkaline battery. Generally, an aqueous solution of potassium hydroxide at a concentration of 30% to 40% having a moderate amount of zinc oxide dissolved therein is used as the electrolyte of an alkaline battery. If being immersed in such strong alkaline electrolyte for long time, the amide groups of the polyamide-polyamine-epichlorohydrin resin will be gradually hydrolyzed, and therefore the wet strength of the separator will decrease.

Thus, although no problem will arise immediately after the alkaline battery has been manufactured, there is a concern that, after the alkaline battery is left for long time, the separator might be broken inside the alkaline battery if the alkaline battery is vibrated during transportation or impacted due to dropping down. If the separator is broken, the zinc gel of the negative electrode will leak from the damaged portion of the separator to contact the positive electrode, so that internal short-circuit will occur. If internal short-circuit occurs, the voltage of the alkaline battery will drop, and the capacity of the battery will decrease. Further, if rapid internal short-circuit occurs, the battery will generate heat and thereby leak the alkaline electrolyte, which is dangerous. Thus, the polyamide-polyamine-epichlorohydrin resin can not be used as an alternative to the readily-soluble polyvinyl alcohol fiber for binding the intersection points of the fibers to each other.

Further, it is known based on the research of the inventors of the present application that the polyamide-polyamine-epichlorohydrin resin results in increased corrosion of a mercury-unadded zinc alloy negative electrode. Thus, when the polyamide-polyamine-epichlorohydrin resin is added to the separator, the corrosion of the negative electrode will be accelerated, and therefore the hydrogen gas yield from the negative electrode will increase. Further, if the hydrogen gas yield increases beyond an acceptable level, the inner pressure of the battery will become high so as to cause leakage of the electrolyte.

Incidentally, in the time when Patent Document 4 was applied for a patent (in 1977), the negative electrode used then was an amalgamated zinc negative electrode obtained by adding mercury in zinc powder to amalgamate zinc surface, and therefore there was no affect on the hydrogen gas yield of the battery even if the separator having the polyamide-polyamine-epichlorohydrin resin added thereto was used in the alkaline battery. However, thereafter, in view of preventing environmental pollution and in order to meet the mercury-free requirement, the amalgamated zinc negative electrode is no longer used in alkaline batteries other than button alkaline batteries. Nowadays, zinc alloy powder obtained by adding aluminum, bismuth, indium or the like to zinc, instead of the amalgamated zinc obtained by adding mercury to zinc, is used as the negative electrode of the alkaline battery.

Thus, it is not possible to reduce the internal resistance of the alkaline battery to further improve the heavy load discharge performance only by adding the aforesaid readily-soluble polyvinyl alcohol fiber and the aforesaid polyamide-polyamine-epichlorohydrin resin either alone or in combination.

In view of the situation and in order to solve the aforesaid conventional problems to reduce the internal resistance of the alkaline battery and improve the heavy load discharge performance, it is an object of the present invention to provide a separator for alkaline battery wherein fibers are bound to each other at the intersection points, sufficient strength is maintained both in dry state and wet state, homogeneous void between fibers is maintained so that ion conduction can be smoothly performed, and further sufficient alkali-resistance can be obtained, as well as provide an alkaline battery that uses the separator.

### Means for Solving the Problems

To solve the aforesaid problems and to tackle the problem that, when performing paper-making process, the readily-soluble polyvinyl alcohol fibers will dissolve so as to fill up the void between fibers of the separator, the inventors of the present application perform dedicated research on polyvinyl alcohol fibers and various kinds of wet strength agents and, as a result, focus on a polyamine-epichlorohydrin resin which is a wet strength agent more excellent in alkali-resistance, instead of the polyamide-polyamine-epichlorohydrin resin which is poor in alkali-resistance.

Similar to the polyamide-polyamine-epichlorohydrin resin, the polyamine-epichlorohydrin resin is a cationic watersoluble resin, and when being added to a slurry liquid containing cellulose fibers, the polyamine-epichlorohydrin resin will self-colonize the surface of fibers. Due to the heat in the drying process of paper, the colonized resin reacts with the hydroxyl groups of the cellulose fibers and the other fibers blended thereinto and to further form cross-links between fibers, and thereby the wet strength of the obtained paper can be increased. Further, compared to the polyamide-polyamine-epichlorohydrin resin, the polyamine-epichlorohydrin resin has larger wet strength enhancing effect, and therefore additive amount can be significantly reduced.

Incidentally, similar to the polyamide-polyamine-epichlorohydrin resin, since the polyamine-epichlorohydrin resin is also a cationic resin, in general, it still tends to contribute to increase the corrosion of the mercury-unadded zinc alloy negative electrode. However, as described above, since the polyamine-epichlorohydrin resin has larger wet strength enhancing effect, the additive amount of the polyamine-epichlorohydrin resin for obtaining necessary wet strength can be reduced compared to that of the polyamide-polyamine-epichlorohydrin resin. As a result, the hydrogen gas yield caused by the corrosion of the mercury-unadded zinc alloy negative electrode can be reduced to a level that does not hinder to use the separator as a separator for alkaline battery.

Further, the inventors of the present application continue to perform research on reducing corrosion of the mercury-unadded zinc alloy negative electrode and, as a result, have newly found that, by adding a polyvinyl alcohol resin (such as the readily-soluble polyvinyl alcohol fiber and the like), which is added to the conventional separator, to a battery constituent material (such as the separator or the electrolyte), corrosion of the mercury-unadded zinc alloy negative electrode is restrained, and the hydrogen gas yield is reduced. Based on this find, by blending the polyvinyl alcohol fiber, together with the polyamine-epichlorohydrin resin, into the separator, the hydrogen gas yield caused by adding polyamine-epichlorohydrin resin can be reduced to lower level, so that it is possible to provide a better separator for alkaline battery.

However, if the readily-soluble polyvinyl alcohol fibers, which are dissolved at relatively low temperature (i.e., in a range of 60°C to 90°C), are blended at a ratio of 10% to 20% by weight, similar to the case of the conventional separator, the void between fibers will be filled up by the polyvinyl alcohol resin, and the electrical resistance of the separator will increase, so that the conventional problem of "increased electrical resistance of the separator" still can not be solved. Thus, even if the hydrogen gas yield can be reduced by adding the readily-soluble polyvinyl alcohol fibers, since the electrical resistance increases, it is not possible to obtain a separator which can reduce the internal resistance of the alkaline battery and therefore is suitable to improving heavy load discharge characteristics.

Based on the aforesaid aspects, as polyvinyl alcohol fibers to be added to restrain the hydrogen gas yield, the inventors of the present application focus on poorly-soluble polyvinyl alcohol fibers whose dissolution temperature in water is 95°C or higher, and think of using the poorly-soluble polyvinyl alcohol fiber together with the polyamine-epichlorohydrin resin. In other words, by adding the polyamine-epichlorohydrin resin, the intersection points of the fibers are bound to each other to obtain necessary wet strength, and thereby the polyvinyl alcohol fibers (as a binder) can be eliminated; and on the other hand, the problem of the hydrogen gas yield caused by adding polyamine-epichlorohydrin resin can be solved by adding the poorly-soluble polyvinyl alcohol fibers which hardly dissolve at the heating temperature of the paper-making process, in addition to adjusting the content of the polyamine-epichlorohydrin resin. By adding the poorly-soluble polyvinyl alcohol fibers, the hydrogen gas yield caused by adding polyamine-epichlorohydrin resin can be reduced without increasing the electrical resistance of the separator. To be specific, the present invention provides the following configurations.

In order to solve the aforesaid problems, the present invention provides a separator for alkaline battery for separating a positive electrode active material and a negative electrode active material of an alkaline battery from each other, the separator containing: 40% by weight of cellulose fibers; and 0.05% to 0.5% by weight of polyamine-epichlorohydrin resin in terms of resin solid content.

Further, the present invention provides the separator for alkaline battery that further contains alkali-resistant synthetic fibers, and contains, as the alkali-resistant synthetic fibers, 40% or less by weight of poorly-soluble polyvinyl alcohol fibers whose dissolution temperature in water is 95°C or higher, and further contains, as the alkali-resistant synthetic fibers, 5% or less by weight of readily-soluble polyvinyl alcohol fibers whose dissolution temperature in water is 60°C to 90°C.

Further, the present invention provides a configuration wherein mercerized pulp is used as the cellulose fibers, and lyocell fibers are used as the cellulose fibers. Further, the present invention provides a configuration wherein cellulose fibers beaten to 500ml to 0ml CSF are used as the cellulose fibers, and the separator has a wet strength of 5 N/15mm to 20 N/15mm. Further, the present invention provides an alkaline battery whose positive electrode active material and negative electrode active material are separated from each other by a separator, wherein the separator is a separator having the aforesaid component.

### Advantages of the Invention

With the separator for alkaline battery and the alkaline battery obtained according to the present invention, by using a separator that contains 40% by weight of cellulose fibers and 0.05% to 0.5% by weight of polyamine-epichlorohydrin resin in terms of resin solid content as the separator of alkaline battery, the separator can obtain necessary wet strength necessary without using the polyvinyl alcohol fibers as a binder. Further, since the polyvinyl alcohol fibers do not dissolve so as to fill up the void between the fibers of the separator, the electrical resistance of the separator can be reduced. Further, since only low content of the polyamine-epichlorohydrin resin is required, the hydrogen gas yield caused by the corrosion of the mercury-unadded zinc alloy negative electrode can be reduced to a level that does not hinder to use the separator as a separator for alkaline battery.

Further, by using the polyamine-epichlorohydrin resin in combination either with 40% or less by weight of poorly-soluble polyvinyl alcohol fibers whose dissolution temperature in water is 95°C or higher or with 5% or less by weight of readily-soluble polyvinyl alcohol fibers whose dissolution temperature in water is 60°C to 90°C, it is possible to bind the intersection points of the fibers to each other by the polyamine-epichlorohydrin resin without filling up the void between fibers, and reduce the hydrogen gas yield caused by adding the polyamine-epichlorohydrin resin. Thus, it is possible to reduce the hydrogen gas yield caused by adding polyamine-epichlorohydrin resin, obtain wet strength necessary for the separator, and effectively reduce the electrical resistance of the separator.

Further, by adding the alkali-resistant synthetic fibers, in addition to beating the cellulose fibers to 500 ml to 0 ml CSF, it is possible to obtain a separator having homogeneous texture and excellent alkali-resistance. As a result, with an alkaline battery that uses the separator of the present invention, the internal resistance can be reduced, and the heavy load discharge performance can be improved.

### Brief Description of Drawing

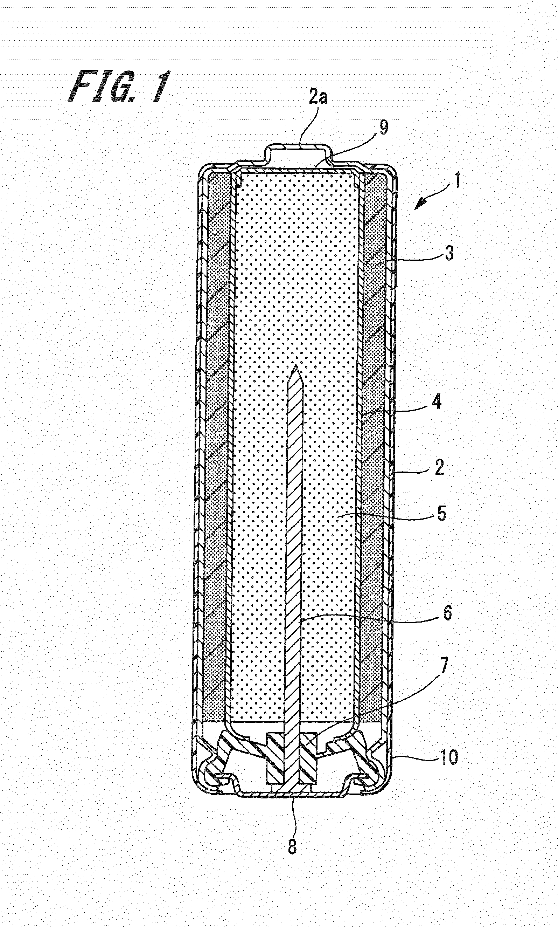

FIG. 1 is a cross-sectional view showing a central longitudinal section of an alkaline battery that uses a separator for alkaline battery according to the present invention.

### Modes for Carrying Out the Invention

A separator for alkaline battery and an alkaline battery according to the best embodiment of the present invention will be described below. The separator for alkaline battery according to the present invention contains 40% by weight of cellulose fibers, and 0.05% to 0.5% by weight of polyamine-epichlorohydrin resin in terms of resin solid content, as basic component.

The separator according to the present invention is a cellulose fiber based separator, and contains at least 40% by weight of cellulose fibers. In the case where binder is not used, the dry strength of the separator is basically contributed by mutual hydrogen-bonding between cellulose fibers, and therefore if the content of the cellulose fibers is less than 40% by weight, the dry strength will decrease. The cellulose fibers to be used are not particularly limited as long as the cellulose fibers have excellent alkali-resistance and do not excessively contract and dissolve in the electrolyte. Examples of the cellulose fibers that meet the aforesaid conditions include: (1) a pulp with high content of alpha-cellulose, such as linter pulp, cotton pulp, dissolving pulp and the like; (2) a pulp obtained by treating wood pulp or non-wood pulp with a low concentration (about 2% to 10% by weight) aqueous solution of NaOH, so that the content of alkali-soluble components is reduced and the content of α-cellulose is increased without changing the crystal structure of cellulose I of the native cellulose; (3) a mercerized pulp obtained by immersing wood pulp or non-wood pulp in a high concentration (about 10% to 25% by weight) aqueous solution of NaOH to mercerize the wood pulp or non-wood pulp, so that the crystal structure of cellulose I is wholly or partially changed to the crystal structure of cellulose II; and (4) one or plural kinds of regenerated cellulose fibers selected from a group including: rayon fiber, cupra fiber, polynosic fiber, lyocell fiber, and the like.

Among the aforesaid cellulose fibers, the lyocell fiber has particularly high rigidity and exhibits less dimension change in the electrolyte. Further, when the lyocell fiber is beaten, countless fine fibrils, each having a diameter of about 0.1 µm to 1 µm, will be formed from the superficial layer of the fiber, so that it is possible to obtain a separator excellent in shielding performance between both electrodes of the battery. Further, since only the superficial layer of the lyocell fiber is fibrillated and the central portion of the fiber is unlikely to be fibrillated, even if the lyocell fiber is beaten, the elongate shape of the fiber will not be spoiled, and that is a characteristic of the lyocell fiber. Thus, even if the lyocell fibers are subjected to a beating process, the density of the separator obtained from the lyocell fibers is lower than the density of the separator obtained from other cellulose fibers, so that it is possible to obtain a separator having small electrical resistance; therefore, the lyocell fiber is a cellulose fiber particularly suitable for the present invention.

Further, in order to improve not only the dry strength of the separator but also the shielding performance of the separator, it is preferred that the cellulose fibers fibrillated by performing beating process are used. Also, it is preferred that the level of the beating process falls within a range of 500 ml to 0 ml CSF. If CSF value is larger than 500 ml, the bonding between cellulose fibers will decrease, and therefore the dry strength of the separator will decrease to 20 N/15mm or less, so that it will cause problems such as being difficult to wind the separator into a cylindrical shape; and further, if CSF value is larger than 500 ml, the shielding performance of the separator well drop due to degraded airtightness of the separator, so that there is a concern that short-circuit might be caused due to dendrite.

The separator according to the present invention is characterized in that a polyamine-epichlorohydrin resin is added into a raw material that includes the aforesaid cellulose fiber, and then paper-making process is performed with the resultant material. The polyamine-epichlorohydrin resin is a resin of diallylamine derivatives represented by the below general formula A and general formula B.

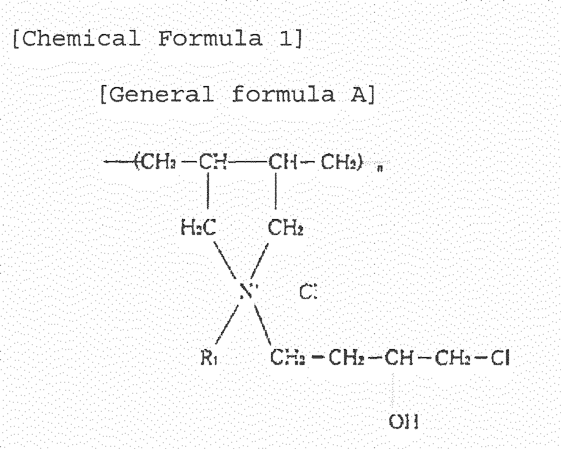

R₁=H, C₁∼C₃ alkyl group

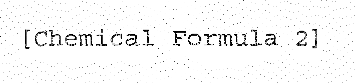

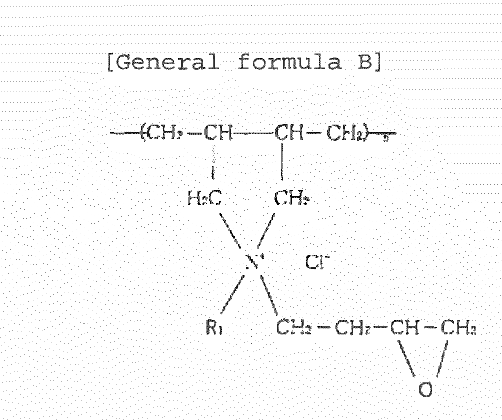

R₁=H, C₁∼C₃ alkyl group

Aqueous solution of the polyamine-epichlorohydrin resin is commercially available as a wet strength agent of paper. Generally, the polyamine-epichlorohydrin resin is commercially supplied as an aqueous solution of the molecular structure represented by general formula A, and is used after the molecular structure represented by general formula A has been transformed into the molecular structure represented by general formula B, wherein the transformation of the molecular structure from the general formula A into the general formula B is achieved by mixing the an alkaline aqueous solution (such as an aqueous solution of NaOH or the like) into the aqueous solution of the molecular structure represented by general formula A to dehydrochlorinate the chlorohydrin group so as to form and activate an epoxy ring. When the resin solution of the activated molecular structure represented by general formula B is added to the slurry liquid containing cellulose fibers, due to the strong cationic nature of the quaternary ammonium ion in the molecular chain, the resin component will fix to the anionic cellulose fibers and the like. Next, the epoxy ring reacts with the hydroxyl groups of the fibers so as to be bound to the hydroxyl group. Further, due to the heat in the drying process of the paper-making process, the binding of the fixed polyamine-epichlorohydrin resin is strengthened to form cross-links between fibers, so that the wet strength of the obtained separator is improved.

The content of the polyamine-epichlorohydrin resin falls within a range of 0.05% to 0.5% by weight with respect to the weight of the separator, wherein the content of the polyamine-epichlorohydrin resin has been converted into the content of the resin of the structure represented by general formula A. If the content of the polyamine-epichlorohydrin resin is small than 0.05% by weight, the wet strength of the separator in the electrolyte will become small, so that the separator tends to break. While if the content of the polyamine-epichlorohydrin resin is larger than 0.5% by weight, the hydrogen gas yield of the alkaline battery will be too high, and the wet strength will be too large, so that the swell of the separator in the electrolyte will be unduly restrained, and the electrical resistance will increase. Incidentally, it is particularly preferred that the content of the polyamine-epichlorohydrin resin is in a range of 0.1% to 0.4% by weight.

The separator according to the present invention may also be obtained by performing beating process on the aforesaid cellulose fibers according to necessity, adding the polyamine-epichlorohydrin resin to the cellulose fibers, and performing paper-making with the cellulose fibers alone. However, the separator made from the cellulose fiber alone tends to largely contract in the electrolyte. Further, if the separator is made from the cellulose fibers alone, the separator will be too soft and lack enough bending rigidity, and therefore it is difficult to precisely wind the separator into a cylindrical shape by a winding device used in the battery production process. Thus, there is a concern that when inserting a cylindrical tube made of the separator into a cylindrical tube-hole formed inside the positive electrode, it will be susceptible to insertion problems, for example, the cylindrical tube may be caught by the wall surface of the inner side of the positive electrode. Thus, it is preferred that, in the separator of the present invention, the cellulose fibers are blended with synthetic fibers excellent in alkali-resistance.

Synthetic fibers that do not dissolve and contract in the electrolyte may be used as the alkali-resistant synthetic fibers to be blended into the separator of the present invention. It is preferred that, in addition to vinylon fibers, polyvinyl alcohol fibers, polyphenylene sulfide fibers and the like, polyamide fibers (such as nylon-6 fibers, nylon-6, 6 fibers and the like), polyolefin fibers (such as polypropylene fibers, polyethylene fibers and the like) and/or the like are used as the synthetic fibers. Since the content of the cellulose fibers in the separator of the present invention is equal to or more than 40% by weight, the content of the alkali-resistant synthetic fibers to be blended into the separator can controlled at 60% or less by weight (i.e., within a range from 0% to 60% by weight).

The vinylon fibers are fibers obtained by reacting polyvinyl alcohol fibers (which are obtained by spinning) with formaldehyde or the like to chemically form cross-links between the hydroxyl groups of the polyvinyl alcohol fibers to acetalize the polyvinyl alcohol fibers. Since the vinylon fibers hardly dissolve into the alkaline electrolyte and hardly change in dimension, if the vinylon fibers are blended into the separator, the dimension change of the separator in the electrolyte can be reduced, and therefore the vinylon fibers are alkali-resistant synthetic fibers particularly suitable for being blended into the separator for alkaline battery. Further, the vinylon fibers hardly affect the hydrogen gas yield.

The polyvinyl alcohol fibers are fibers obtained by spinning the solution of the polyvinyl alcohol resin to fibers, and heating and drawing the obtained fibers. Compared with the vinylon fibers, the polyvinyl alcohol fibers tend to slightly swell in the alkaline electrolyte. Thus, the polyvinyl alcohol fibers are alkali-resistant synthetic fibers which are a little bit weaker in alkali-resistance, but still can be used in the separator. As described in Patent Documents 1 and 2, the readily-soluble polyvinyl alcohol fibers having a dissolution temperature of 60°C to 90°C in water are conventionally used as a binder in a separator for alkaline battery. Since the readily-soluble polyvinyl alcohol fibers are used, as described above, the polyvinyl alcohol resin dissolved in the drying process of the paper-making process will spread between fibers, so that the void of the separator will be filled and many pores will be plugged. As a result, the electrical resistance of the separator will unnecessarily increase.

To solve such a problem, the poorly-soluble polyvinyl alcohol fibers having a dissolution temperature of 95°C in water are used in the present invention. The molecule crystallinity of the polyvinyl alcohol fibers changes depending on the degree of heating and drawing the polyvinyl alcohol fiber; and by increasing the draw ratio to improve the crystallization, the dissolution temperature the polyvinyl alcohol fibers in water can be raised from about 60°C to 100°C or higher.

The dryer of the paper machine for papermaking the separator is a cylindrical body. The surface of the dryer is heated by steam coming from the inside of the dryer, and the wet paper of the separator is dried by being heated by the surface of the dryer. Since the surface of the dryer is heated by the steam, the surface of the dryer is heated to 100°C or higher in a state where there is no wet paper. However, when performing paper-making process, since the wet paper is continuously supplied to the surface of the dryer, and since the wet paper contains water between fibers, the surface of the dryer is cooled by the heat of evaporation while the water is evaporating, so that the temperature of the wet paper is kept to about 95°C. Further, when the temperature of the separator exceeds 100°C, the wet paper has been dried, so that there will be no water. Thus, there is no concern that the poorly-soluble polyvinyl alcohol fibers might be dissolved. Further, the poorly-soluble polyvinyl alcohol fibers are highly crystallized high-molecular substance. When water enters the crystallized molecular chain, the crystallinity will become loose, the fibers will be swelled by water, and then dissolution will occur. Thus, even if the poorly-soluble polyvinyl alcohol fibers dissolve at 95°C, since dissolution actually consumes time, the water of the wet paper will be dried in the duration of the dissolution process, so that the amount of the poorly-soluble polyvinyl alcohol fibers dissolved in the drying process of the dryer is extremely small.

Thus, since the poorly-soluble polyvinyl alcohol fibers do not dissolve at the temperature of the dryer in the drying process (even if the poorly-soluble polyvinyl alcohol fibers are dissolved in the drying process is extremely small), the shape of the fibers will remain unchanged after the separator has been dried, no polyvinyl alcohol resin will be filled up in the void between fibers, and therefore the poorly-soluble polyvinyl alcohol fiber contributes to the stability in dimension of the separator. As a result, there is almost no increase in electrical resistance of the separator compared with the readily-soluble polyvinyl alcohol fibers.

By adding the polyamine-epichlorohydrin resin, the separator of the present invention reaches a level that does not hinder to use the separator as a separator for alkaline battery; however, the hydrogen gas yield from the negative electrode of the alkaline battery will increase. Thus, by blending the poorly-soluble polyvinyl alcohol fibers into the separator, the hydrogen gas yield from the negative electrode of the alkaline battery can be reduced to lower level. It is preferred that the content of the poorly-soluble polyvinyl alcohol fibers with respect to the separator is controlled to 40% or less by weight, particularly in a ranged of 5% to 40% by weight. If the content of the poorly-soluble polyvinyl alcohol fibers is less than 5% by weight, the effect of reducing the hydrogen gas yield will become low. While if the content of the poorly-soluble polyvinyl alcohol fibers is more than 40% by weight, the hydrogen gas yield will be reversed from reduction to increase, and therefore it is preferred that the content of the poorly-soluble polyvinyl alcohol fibers is not more than 40% by weight.

Incidentally, similar to the poorly-soluble polyvinyl alcohol fibers, the readily-soluble polyvinyl alcohol fibers may also reduce the hydrogen gas yield from the negative electrode of the alkaline battery, and therefore it is also possible to reduce the hydrogen gas yield from the negative electrode of the alkaline battery by blending the readily-soluble polyvinyl alcohol fiber having a dissolution temperature of 60°C to 90°C in water into the separator of the present invention. However, since the readily-soluble polyvinyl alcohol fiber will dissolve in the drying process of the separator to fill up the void of the separator to therefore increase the electrical resistance, it is preferred that, when blending the readily-soluble polyvinyl alcohol fibers into the separator, the content of the readily-soluble polyvinyl alcohol fibers shall be equal to or less than 5% by weight, which is a level that does not have adverse effect on the electrical resistance. Incidentally, compared to the poorly-soluble polyvinyl alcohol fibers, since the readily-soluble polyvinyl alcohol fibers have larger effect on preventing the corrosion of the negative electrode, it is possible to obtain the effect on preventing the corrosion of the negative electrode even if the blending amount of the readily-soluble polyvinyl alcohol fiber is equal to or less than 5% by weight.

Next, the details of how the inventors of the present application have found that the hydrogen gas yield of the separator can be reduced by adding the polyvinyl alcohol fiber will be described below. First, the inventors of the present application compared the gas yield of a separator a, into which the readily-soluble polyvinyl alcohol fibers were blended as a binder, with the gas yield of a separator b, into which no readily-soluble polyvinyl alcohol fiber was blended, and found that the gas yield of the separator a was less than the gas yield of the separator b. The result is shown in Table 1. Incidentally, the mercerized pulp and the vinylon fibers blended into the separator a were identical to those blended into the separator b.

**[Table 1]**

| Gas yield of separator a and separator b | | | |
|---|---|---|---|
| | | | Gas yield µl/g |
| Separator a | Mercerized pulp | 60% | 150 |
| | Vinylon fiber | 30% | |
| | Readily-soluble polyvinyl alcohol fiber | 10% | |
| Separator b | Mercerized pulp | 60% | 190 |
| | Vinylon fiber | 40% | |

Next, in order to investigate the cause of such phenomenon, the gas yield of each of the fiber materials used in the separator a and the separator b was measured separately. The result is shown in Table 2.

**[Table 2]**

| Gas yield of fiber material used in separator a and separator b | |
|---|---|
| | µl/g |
| Mercerized pulp | 200 |
| Vinylon fiber | 155 |
| Readily-soluble polyvinyl alcohol fiber | 530 |

As shown in Table 1 and Table 2, the gas yield of the readily-soluble polyvinyl alcohol fiber alone is unexpectedly higher than the separator a and the separator b. Incidentally, the result shown in Table 2 was obtained by taking the same weight of each of the fiber materials used in the separators as the weight of the separators measured in Table 1, putting each fiber material into the same amount of the zinc alloy powder and electrolyte as that in the case where the separators have been measured, and measuring the gas yield. Thus, the amount of the polyvinyl alcohol fibers shown in Table 2 is ten times as much as the amount of the polyvinyl alcohol fibers actually contained in the separator a.

However, when estimating based on the gas yield and blending ratio of each of the fiber materials, a conflicting result will be obtained, i.e., the fact that the gas yield of the separator a is smaller than the gas yield of the separator b conflicts with the fact that the gas yield of the readily-soluble polyvinyl alcohol fibers is 530 µl/g, which is a large value. Based on these results, the inventors of the present application presumed that addition of small amount of the polyvinyl alcohol resin might contribute to the reduction of the gas yield of the separator. Thus, the inventors of the present application have confirmed the gas yield of a material obtained by mixing powdered polyvinyl alcohol resin (polymerization degree: 1700, fully hydrolyzed) into the separator b consisting of the mercerized pulp and the vinylon fiber. The result is shown in Table 3.

**[Table 3]**

| Examples of adding polyvinyl alcohol resin | | | |
|---|---|---|---|
| | Separator b (%) | (%) | µl/g |
| Example 1 | 100 | 0 | 190 |
| Example 2 | 99 | 1 | 180 |
| Example 3 | 95 | 5 | 140 |
| Example 4 | 90 | 10 | 120 |
| Example 5 | 70 | 30 | 190 |
| Example 6 | 0 | 0 | 150 |

It can be known from Experimental Examples 2 to 4 of Table 3 that the gas yield of the separator b can be reduced by adding small amount of the polyvinyl alcohol resin. Further, it can be known from Experimental Example 5 that if the amount of the polyvinyl alcohol resin is increased, the gas yield of the separator b will increase. Incidentally, the gas yield of Experimental Example 6, in which measurement is performed on the zinc alloy powder and electrolyte of the negative electrode without adding the separator b and polyvinyl alcohol resin, is 150 µl/g, which is larger than the gas yield (140 µl/g) of Experimental Example 3 and the gas yield (120 µl/g) of Experimental Example 4, in which polyvinyl alcohol resin is added to the separator b. Based on this fact, it is considered that by adding a suitable amount of polyvinyl alcohol resin, not only the factor caused by gas yield of the separator b is reduced, but also the gas yield of the zinc alloy powder of the negative electrode is directly reduced.

Incidentally, the inventors of the present application have also done study on the polymerization degree and particle size of the polyvinyl alcohol resin, and have found that the polyvinyl alcohol resin with small polymerization degree has large effect on reducing the gas yield, and that the polyvinyl alcohol resin with small particle size has large effect on reducing the gas yield. Particularly, the particle size has larger effect than the polymerization degree. Further, the inventors of the present application have also investigated the gas yield reducing effect of denatured polyvinyl alcohol resin, and have found that, similar to native polyvinyl alcohol resin, addition of anionic denatured polyvinyl alcohol resin (such as maleic acid denaturation, sulfonic acid denaturation or the like) also has gas yield reducing effect. On the other hand, addition of cationic denatured polyvinyl alcohol resin causes the gas yield to increase.

The separator of the present invention is obtained by performing paper-making process with the aforesaid raw material by a normal paper-making method in which an inclined wire paper machine, a cylinder paper machine or a Fourdrinier paper machine is employed. It is preferred that the wet strength of the obtained separator falls within a range of 5 N/15mm to 20 N/15mm, which is a wet strength value obtained by measuring the separator moistened with a 40% aqueous solution of KOH. If the wet strength value is lower than 5 N/15mm, the wet strength will be too low, so that the separator will tend to be broken, so that there is a concern that the internal short-circuit might be caused due to the impact caused when transporting or dropping down the alkaline battery. While if the wet strength value is higher than 20 N/15mm, the wet strength will be too high, so that the swell of the separator in the electrolyte will be restrained, and the electrical resistance will increase.

Incidentally, regarding the corrosion accelerating effect of the cationic resin (as the wet strength agent, such as the polyamine-epichlorohydrin resin or the like) with respect to the negative electrode of the mercury-unadded zinc alloy powder and the corrosion reducing effect of the polyvinyl alcohol resin, the cause and mechanism of the corrosion accelerating effect are as yet not well known. It is known, as the results of the aforesaid experiments, that the cationic resin, such as the wet strength agent or the like, causes the hydrogen gas yield of the zinc alloy powder to increase; while suitable addition of the polyvinyl alcohol resin causes the hydrogen gas yield to reduce. As a hypothesis, it is considered that due to the metal (such as indium and/or the like) added to the zinc alloy powder, a protective coat that increases the hydrogen overvoltage is formed on the surface of the zinc alloy powder in the battery; the cationic resin (such as the polyamine-epichlorohydrin resin or the like) is involved in the weakening of the protective coat, and the polyvinyl alcohol resin is involved in the strengthening of the protective coat. The hypothesis proposed by the inventors of the present application is after all a presumption, the corrosion accelerating effect of the cationic resin (as the wet strength agent, such as the polyamine-epichlorohydrin resin or the like) with respect to the negative electrode of the mercury-unadded zinc alloy powder and the corrosion reducing effect of the polyvinyl alcohol resin may also be clearly known from the data of various Examples and Comparative Examples described below.

The concrete Examples of the separator for alkaline battery according to the present invention and the alkaline battery uses the separator will be described below. Note that the present invention is not limited to the description of the following Examples.

### [Example 1]

50% by weight of mercerized softwood pulp (Porosanier-J-HP pulp, produced by Rayonier Inc.) was beaten by a double disc refiner to 100 ml CSF. 50% by weight of vinylon fibers (FFN fibers produced by Unitika Ltd., fiber diameter: 0.6 dtex; fiber length: 3 mm) were mixed into the beaten pulp. Next, the polyamine-epichlorohydrin resin (wet strength agent WS4010, produced by Seiko PMC Corporation) was added to the total weight of the mixed fibers to obtain a raw material which contains 0.05% by weight of the resin in terms of resin solid content. Such raw material was used to perform paper-making process by a cylinder paper machine to obtain a separator with a thickness of 70.0 µm, a basis weight of 33.0 g/m², and a density of 0.471 g/cm³.

### [Example 2]

The same raw material as Example 1 was used except that the content of the polyamine-epichlorohydrin resin (wet strength agent WS4010, produced by Seiko PMC Corporation) was 0.15% by weight. Such raw material was used to perform paper-making process by a cylinder paper machine to obtain a separator with a thickness of 70.5 µm, a basis weight of 33.2 g/m², and a density of 0.471 g/cm³.

### [Example 3]

The same raw material as Example 1 was used except that the content of the polyamine-epichlorohydrin resin (wet strength agent WS4010 produced by Seiko PMC Corporation) was 0.50% by weight. Such raw material was used to perform paper-making process by a cylinder paper machine to obtain a separator with a thickness of 70.2 µm, a basis weight of 33.8 g/m², and a density of 0.481 g/cm³.

### [Example 4]

50% by weight of mercerized softwood pulp (Porosanier-J-HP pulp, produced by Rayonier Inc.) was beaten by a double disc refiner to 100 ml CSF. 45% by weight of vinylon fibers (FFN fibers produced by Unitika Ltd., fiber diameter: 0.6dtex; fiber length: 3mm) and 5% by weight of poorly-soluble polyvinyl alcohol fibers (AH fibers produced by Unitika Ltd., fiber diameter: 1.1 dtex; fiber length: 2 mm; dissolution temperature in water: 99°C) were mixed into the beaten pulp. Next, the polyamine-epichlorohydrin resin (wet strength agent WS4010 produced by Seiko PMC Corporation) was added to the total weight of the mixed fibers to obtain a raw material which contains 0.15% by weight of the resin in terms of resin solid content. Such raw material was used to perform paper-making process by a cylinder paper machine to obtain a separator with a thickness of 70.7 µm, a basis weight of 33.0 g/m², and a density of 0.467 g/cm³.

### [Example 5]

The same raw material as Example 4 was used except that the content of the vinylon fibers and the content of the poorly-soluble polyvinyl alcohol fibers were both 25% by weight. Such raw material was used to perform paper-making process by a cylinder paper machine to obtain a separator with a thickness of 70.1 µm, a basis weight of 33.1 g/m², and a density of 0.472 g/cm³.

### [Example 6]

The same raw material as Example 4 was used except that the content of the vinylon fibers was 10% by weight, and the content of the poorly-soluble polyvinyl alcohol fibers was 40% by weight. Such raw material was used to perform paper-making process by a cylinder paper machine to obtain a separator with a thickness of 69.3 µm, a basis weight of 33.2 g/m², and a density of 0.479 g/cm³.

### [Example 7]

50% by weight of mercerized softwood pulp (Porosanier-J-HP pulp, produced by Rayonier Inc.) was beaten by a double disc refiner to 50 ml CSF. 50% by weight of vinylon fibers (FFN fibers produced by Unitika Ltd., fiber diameter: 0.6 dtex; fiber length: 3 mm) was mixed into the beaten pulp. Next, the polyamine-epichlorohydrin resin (wet strength agent WS4010 produced by Seiko PMC Corporation) was added to the total weight of the mixed fibers to obtain a raw material which contains (10% by weight of the resin in terms of resin solid content. Such raw material was used to perform paper-making process by a cylinder paper machine to obtain a separator with a thickness of 66.1 µm, a basis weight of 33.6 g/m², and a density of 0.508 g/cm³.

### [Example 8]

The same raw material as Example 7 was used except that the mercerized softwood pulp was beaten to 300 ml CSF. Such raw material was used to perform paper-making process by a cylinder paper machine to obtain a separator with a thickness of 83.0 µm, a basis weight of 33.2 g/m², and a density of 0.400 g/cm³.

### [Example 9]

The same raw material as Example 7 was used except that the mercerized softwood pulp was beaten to 480 ml CSF. Such raw material was used to perform paper-making process by a cylinder paper machine to obtain a separator with a thickness of 98.0 µm, a basis weight of 33.0 g/m², and a density of 0.337 g/cm3 .

### [Example 10]

40% by weight of mercerized softwood pulp (Porosanier-J-HP pulp, produced by Rayonier Inc.) was beaten by a double disc refiner to 100 ml CSF. 60% by weight of vinylon fibers (FFN fibers produced by Unitika Ltd., fiber diameter: 0.6 dtex; fiber length: 3 mm) was mixed into the beaten pulp. Next, the polyamine-epichlorohydrin resin (wet strength agent WS4010 produced by Seiko PMC Corporation) was added to the total weight of the mixed fibers to obtain a raw material which contains 0.15% by weight of the resin in terms of resin solid content. Such raw material was used to perform paper-making process by a cylinder paper machine to obtain a separator with a thickness of 76.0 µm, a basis weight of 33.2 g/m², and a density of 0.436 g/cm³.

### [Example 11]

70% by weight of mercerized softwood pulp (Porosanier-J-HP pulp, produced by Rayonier Inc.) was beaten by a double disc refiner to 100 ml CSF. 30% by weight of vinylon fibers (FFN fibers produced by Unitika Ltd., fiber diameter: 0.6 dtex; fiber length: 3 mm) was mixed into the beaten pulp. Next, the polyamine-epichlorohydrin resin (wet strength agent WS4010 produced by Seiko PMC Corporation) was added to the total weight of the mixed fibers to obtain a raw material which contains 0.15% by weight of the resin in terms of resin solid content. Such raw material was used to perform paper-making process by a cylinder paper machine to obtain a separator with a thickness of 64.9 µm, a basis weight of 33.4 g/m², and a density of 0.515 g/cm³.

### [Example 12]

100% by weight of mercerized softwood pulp (Porosanier-J-HP pulp, produced by Rayonier Inc.) was beaten by a double disc refiner to 100 ml CSF. Next, the polyamine-epichlorohydrin resin (wet strength agent WS4010 produced by Seiko PMC Corporation) was added to the beaten mercerized softwood pulp to obtain a raw material which contains 0.15% by weight of the resin in terms of resin solid content. Such raw material was used to perform paper-making process by a cylinder paper machine to obtain a separator with a thickness of 58.4 µm, a basis weight of 33.2 g/m², and a density of 0.568 g/cm³.

### [Comparative Example 1]

A raw material obtained by mixing the mercerized softwood pulp and the vinylon fiber totally identical to those used in Example 1, but without adding the polyamine-epichlorohydrin resin, was used to perform paper-making process by a cylinder paper machine to obtain a separator with a thickness of 71.5 µm, a basis weight of 33.1 g/m², and a density of 0.463 g/cm³.

### [Comparative Example 2]

The polyamine-epichlorohydrin resin (wet strength agent WS4010 produced by Seiko PMC Corporation) was added into a material obtained by mixing the mercerized softwood pulp and the vinylon fiber totally identical to those used in Example 1 to obtain a raw material which contains 0.02% by weight of the resin in terms of resin solid content. Such raw material was used to perform paper-making process by a cylinder paper machine to obtain a separator with a thickness of 70.1 µm, a basis weight of 33.0 g/m², and a density of 0.471 g/cm³.

### [Comparative Example 3]

The polyamine-epichlorohydrin resin (wet strength agent WS4010 produced by Seiko PMC Corporation) was added into a material obtained by mixing the mercerized softwood pulp and the vinylon fiber totally identical to those used in Example 1 to obtain a raw material which contains 0.70% by weight of the resin in terms of resin solid content. Such raw material was used to perform paper-making process by a cylinder paper machine to obtain a separator with a thickness of 69.5 µm, a basis weight of 33.6 g/m², and a density of 0.483 g/cm³.

### [Comparative Example 4]

The polyamide-polyamine-epichlorohydrin resin (wet strength agent WS4020 produced by Seiko PMC Corporation) was added into a material obtained by mixing the mercerized softwood pulp and the vinylon fiber totally identical to those used in Example 1 to obtain a raw material which contains (10% by weight of the resin in terms of resin solid content. Such raw material was used to perform paper-making process by a cylinder paper machine to obtain a separator with a thickness of 70.3 µm, a basis weight of 33.2 g/m², and a density of 0.472 g/cm³. The wet strength agent WS4020 is the same polyamide-polyamine-epichlorohydrin resin as the "Kymene 557" (trade name, manufactured by DIC-Hercules chemicals Inc.) disclosed in Patent Document 4.

### [Comparative Example 5]

The polyamide-polyamine-epichlorohydrin resin (wet strength agent WS4020 produced by Seiko PMC Corporation) was added into a material obtained by mixing the mercerized softwood pulp and the vinylon fiber totally identical to those used in Example 1 to obtain a raw material which contains 0.50% by weight of the resin in terms of resin solid content. Such raw material was used to perform paper-making process by a cylinder paper machine to obtain a separator with a thickness of 70.0 µm, a basis weight of 33.0 g/m², and a density of 0.471 g/cm³.

### [Comparative Example 6]

50% by weight of mercerized softwood pulp (Porosanier-J-HP pulp, produced by Rayonier Inc.) was beaten by a double disc refiner to 100 ml CSF. 40% by weight of vinylon fibers (FFN fibers produced by Unitika Ltd., fiber diameter: 0.6 dtex; fiber length: 3 mm) and 10% by weight of readily - soluble polyvinyl alcohol fibers (SML fibers produced by Unitika Ltd., fiber diameter: 1.1 dtex; fiber length: 3 mm; dissolution temperature in water: 70°C) were mixed into the beaten pulp. Such raw material, without adding the polyamine-epichlorohydrin resin, was used to perform paper-making process by a cylinder paper machine to obtain a separator with a thickness of 63.5 µm, a basis weight of 33.3 g/m², and a density of 0.524 g/cm³. The separator of Comparative Example 6 is a conventional separator into which the readily-soluble polyvinyl alcohol fibers are blended.

Various measured data of the separators obtained by Examples 1 to 12 and Comparative Examples 1 to 6 is shown in Table 4.

**[Table 4]**

| Separator | Cellulose fiber | | | Synthetic fiber | | Added resin | | cellulose content | PVA content | Thichness | Basis weight | Density | Airtightness | Dry strength | Wet strength | Electrical resistance | Hydrogen gas yield |
|---|---|---|---|---|---|---|---|---|---|---|---|---|---|---|---|---|---|
| | Type | CSF (ml) | % | Type | % | Type | % | % | % | *µ*m | g/m2 | g/cm³ | Modified measuring method(sec/100ml) | N/15mm | N/15mm | mΩ | µl/g |
| Example1 | Mercerized pulp | 100 | 50 | Vinylon fiber | 50 | PAE | 0.05 | 49.9 | - | 70.0 | 33.0 | 0.471 | 30 | 33 | 6.0 | 17.2 | 210 |
| Example2 | Marcerized pulp | 100 | 50 | Vinylon fiber | 50 | PAE | 0.15 | 49.7 | - | 70.5 | 33.2 | 0.471 | 33 | 33 | 10.6 | 17.8 | 240 |
| Example3 | Mercerized pulp | 100 | 50 | Vinylon fiber | 50 | PAE | 0.50 | 49.8 | - | 70.2 | 33.8 | 0.481 | 37 | 35 | 17.9 | 18.6 | 300 |
| Example4 | Mercerized pulp | 100 | 50 | Vinylon fiber | 45 | PAE | 0.15 | 49.7 | 5.1 | 70.7 | 33.0 | 0.467 | 33 | 36 | 11.1 | 17.5 | 170 |
| | | | | PVA A fiber(99°C) | 5 | | | | | | | | | | | | |
| Example5 | Mercerized pulp | 100 | 50 | Vinylon fiber | 25 | PAE | 0.15 | 49.5 | 25.2 | 70.1 | 33.1 | 0.472 | 32 | 37 | 11.5 | 17.6 | 130 |
| | | | | PVA fiber(99°C) | 25 | | | | | | | | | | | | |
| Example6 | Mercerized pulp | 100 | 50 | Vinylon fiber | 10 | PAE | 0.15 | 49.2 | 39.7 | 69.3 | 33.2 | 0.479 | 35 | 37 | 11.7 | 17.8 | 170 |
| | | | | PVA fiber(99°C) | 40 | | | | | | | | | | | | |
| Example7 | Mercerized pulp | 50 | 50 | Vinylon fiber | 50 | PAE | 0.15 | 48.7 | - | 66.1 | 33.6 | 0.508 | 45 | 40 | 12.3 | 18.8 | 240 |
| Example8 | Mercerized pulp | 300 | 50 | Vinylon fiber | 50 | PAE | 0.15 | 50.9 | - | 83.0 | 33.2 | 0.400 | 5.6 | 29 | 10.3 | 16.5 | 230 |
| Example9 | Mercerized pulp | 480 | 50 | Vinylon fiber | 50 | PAE | 0.15 | 51.4 | - | 98.0 | 33.0 | 0.337 | 3.2 | 23 | 6.2 | 14.6 | 230 |
| Example10 | Mercerized pulp | 100 | 40 | Vinylon fiber | 60 | PAE | 0.15 | 40.5 | - | 76.2 | 33.2 | 0.436 | 15 | 28 | 8.3 | 15.7 | 230 |
| Example11 | Mercerized pulp | 100 | 70 | Vinylon fiber | 30 | PAE | 0.15 | 69.6 | - | 64.9 | 33.4 | 0.515 | 57 | 44 | 12.6 | 18.6 | 230 |
| Example12 | Mercerized pulp | 100 | 100 | none | 0 | PAE | 0.15 | 99.8 | - | 58.4 | 33.2 | 0.568 | 86 | 48 | 13.4 | 20.1 | 230 |
| Comparison1 | Mercerized pulp | 100 | 50 | Vinylon fiber | 50 | none | 0 | 49.9 | - | 71.5 | 33.1 | 0.463 | 30 | 30 | 1.5 | 15.2 | 190 |
| Comparison2 | Mercerized pulp | 100 | 50 | Vinylon fiber | 50 | PAE | 0.02 | 49.9 | - | 70.1 | 33.0 | 0.471 | 31 | 31 | 2.0 | 17.3 | 200 |
| Comparison3 | Mercerized pulp | 100 | 50 | Vinylon fiber | 50 | PAE | 0.70 | 49.3 | - | 69.5 | 33.6 | 0.483 | 40 | 37 | 21.0 | 20.8 | 410 |
| Comparison4 | Mercerized pulp | 100 | 50 | Vinylon fiber | 50 | PAPAE | =0.15 | 49.6 | - | 70.3 | 33.2 | 0.472 | 40 | 32 | 8.1 | 17.3 | 230 |
| Comparison5 | Mercerized pulp | 100 | 50 | Vinylon fiber | 50 | PAPAE | = 0.50 | 48.8 | - | 70.0 | 33.0 | 0.471 | 43 | 35 | 14.0 | 17.6 | 300 |
| Comparison6 | Mercerized pulp | 100 | 50 | Vinylon fiber | 40 | none | 0 | 50.2 | 9.8 | 63.5 | 33.3 | 0.524 | 82 | 45 | 11.3 | 27.2 | 140 |
| | | | | PVA fiber 70°C) | 10 | | | | | | | | | | | | |

| | | | | | | | | | | | | | | | | | |
|---|---|---|---|---|---|---|---|---|---|---|---|---|---|---|---|---|---|
| PAE : polyamine-epichlorohydrin resin PAPAE : polyamide-polyamine-epichlorohydrin resin PVA fiber : polyvinyl alcohol fiber, ( ) represents dissolution temperature in water. | | | | | | | | | | | | | | | | | |

### [Example 13]

70% by weight of mercerized softwood pulp (HPZ pulp, produced by Buckeye Technologies Inc.) was beaten by a double disc refiner to 0 ml CSF. 30% by weight of vinylon fibers (FFN fibers produced by Unitika Ltd., fiber diameter: 0.6 dtex; fiber length: 2 mm) was mixed into the beaten pulp. Next, the polyamine-epichlorohydrin resin (wet strength agent WS4010 produced by Seiko PMC Corporation) was added to the total weight of the mixed fibers to obtain a raw material which contains 0.12% by weight of the resin in terms of resin solid content. Such raw material was used to perform paper-making process by a Fourdrinier paper machine to obtain a separator with a thickness of 60.2 µm, a basis weight of 37.5 g/m², and a density of 0.623 g/cm³.

### [Example 14]

70% by weight of mercerized softwood pulp (HPZ pulp, produced by Buckeye Technologies Inc.) was beaten by a double disc refiner to 0 ml CSF. 20% by weight of vinylon fibers (FFN fibers produced by Unitika Ltd., fiber diameter: 0.6 dtex; fiber length: 2 mm) and 10% by weight of poorly-soluble polyvinyl alcohol fibers (22A fibers produced by Unitika Ltd., fiber diameter: 1.1 dtex; fiber length: 2 mm; dissolution temperature in water: 100°C or higher) were mixed into the beaten pulp. Next, the polyamine-epichlorohydrin resin (wet strength agent WS4010 produced by Seiko PMC Corporation) was added to the total weight of the mixed fibers to obtain a raw material which contains 0.12% by weight of the resin in terms of resin solid content. Such raw material was used to perform paper-making process by a Fourdrinier paper machine to obtain a separator with a thickness of 59.8 µm, a basis weight of 37.1 g/m², and a density of 0.620 g/cm³.

### [Example 15]

The same raw material as Example 14 was used except that the content of the vinylon fibers and the content of the poorly-soluble polyvinyl alcohol fibers (22A fibers produced by Unitika Ltd., fiber diameter: 1.1 dtex; fiber length: 2 mm; dissolution temperature in water: 100°C or higher) were both 15% by weight. Such raw material was used to perform paper-making process by a Fourdrinier paper machine to obtain a separator with a thickness of 60.0 µm, a basis weight of 36.5 g/m², and a density of 0.608 g/cm³.

### [Example 16]

70% by weight of mercerized softwood pulp (HPZ pulp, produced by Buckeye Technologies Inc.) was beaten by a double disc refiner to 0 ml CSF. 30% by weight of poorly-soluble polyvinyl alcohol fibers (22A fibers produced by Unitika Ltd., fiber diameter: 1.1 dtex; fiber length: 2 mm; dissolution temperature in water: 100°C or higher) was mixed into the beaten pulp. Next, the polyamine-epichlorohydrin resin (wet strength agent WS4010 produced by Seiko PMC Corporation) was added to the total weight of the mixed fibers to obtain a raw material which contains 0.12% by weight of the resin in terms of resin solid content. Such raw material was used to perform paper-making process by a Fourdrinier paper machine to obtain a separator with a thickness of 61.0 µm, a basis weight of 36.2 g/m², and a density of 0.593 g/cm³.

### [Example 17]

85% by weight of mercerized softwood pulp (HPZ pulp, produced by Buckeye Technologies Inc.) was beaten by a double disc refiner to 0 ml CSF. 15% by weight of vinylon fibers (FFN fibers produced by Unitika Ltd., fiber diameter: 0.6 dtex; fiber length: 2 mm) was mixed into the beaten pulp. Next, the polyamine-epichlorohydrin resin (wet strength agent WS4010 produced by Seiko PMC Corporation) was added to the total weight of the mixed fibers to obtain a raw material which contains 0.26% by weight of the resin in terms of resin solid content. Such raw material was used to perform paper-making process by a Fourdrinier paper machine to obtain a separator with a thickness of 49.6 µm, a basis weight of 33.2 g/m², and a density of 0.669 g/cm³.

### [Comparative Example 7]

70% by weight of mercerized softwood pulp (HPZ pulp, produced by Buckeye Technologies Inc.) was beaten by a double disc refiner to 0 ml CSF. 20% by weight of vinylon fibers (FFN fibers produced by Unitika Ltd., fiber diameter: 0.6 dtex; fiber length: 2 mm) and 10% by weight of poorly-soluble polyvinyl alcohol fibers (22A fibers produced by Unitika Ltd., fiber diameter: 1.1 dtex; fiber length: 2 mm; dissolution temperature in water: 100°C or higher) were mixed into the beaten pulp. Such raw material was used to perform paper-making process by a Fourdrinier paper machine to obtain a separator with a thickness of 60.5 µm, a basis weight of 37.6 g/m², and a density of 0.621 g/cm³. The separator of Comparative Example 7 is equivalent to the separator obtained by Example 14 except that the polyamine-epichlorohydrin resin is not added.

### [Comparative Example 8]

Polyamide-polyamine-epichlorohydrin resin (wet strength agent WS4020 produced by Seiko PMC Corporation) was added to the same raw material as Comparative Example 7 to obtain a raw material which contains 0.12% by weight of the resin in terms of resin solid content. Such raw material was used to perform paper-making process by a Fourdrinier paper machine to obtain a separator with a thickness of 60.4 µm, a basis weight of 37.0 g/m², and a density of 0.613 g/cm³.

### [Comparative Example 9]

Instead of 10% by weight of the poorly-soluble polyvinyl alcohol fibers of Comparative Example 7, 10% by weight of readily-soluble polyvinyl alcohol fibers (SMM fibers produced by Unitika Ltd., fiber diameter: 1.1 dtex; fiber length: 2 mm; dissolution temperature in water: 80°C or higher) was mixed into the beaten pulp to obtain a raw material for performing paper-making process. Such raw material was used to perform paper-making process by a Fourdrinier paper machine; however, the polyvinyl alcohol fiber was dissolved in the drying process, so that the separator was bound to the surface of the dryer and the dryer felt, and therefore it was not possible to perform paper-making process to make a separator as a continuous sheet. Thus, the sheet bound on the surface of the dryer was peeled off, and the peeled separator pieces were used as the sample. The separator piece has a thickness of 52.6 µm, a basis weight of 36.8 g/m², and a density of 0.700 g/cm³

Various measured data of the separators obtained by Examples 13 to 17 and Comparative Examples 7 to 9 is shown in Table 5.

**[Table 5]**

| Separator | Cellulose fiber | | | Synthetic fiber | | Added resin | | Cellulose content | PVA content | Thickness | Basis weight | Density | Airtightness | Dry strength | Wet strength | Electrical resistance | Hydrogen gas yiel d |
|---|---|---|---|---|---|---|---|---|---|---|---|---|---|---|---|---|---|
| | Type | CSF (ml) | % | Type | % | Type | % | % | % | *µ*m | g/m² | g/cm³ | Basic measuring method(min/100ml) | N/15mm | N/15mm | mΩ | *µ* l/g |
| Example13 | Mercerized pulp | 0 | 70 | Vinylon fiber | 30 | PAE | 0.12 | 69.1 | - | 60.2 | 37.5 | 0.623 | 40.0 | 48 | 9.5 | 27.0 | 230 |
| Example14 | Mercerized pulp | 0 | 70 | Vinylon fiber | 20 | PAE | 0.12 | 68.9 | 10.3 | 59.8 | 37.1 | 0.620 | 38.1 | 49 | 9.7 | 27.2 | 170 |
| | | | | PVA fiber(>100°C) | 10 | | | | | | | | | | | | |
| Example15 | Mercerized pulp | 0 | 70 | Vinylon fiber | 15 | PAE | 0.12 | 68.7 | 14.9 | 60.0 | 36.5 | 0.608 | 35.2 | 51 | 10.2 | 27.0 | 130 |
| | | | | PVA fiber(>100°C) | 15 | | | | | | | | | | | | |
| Example16 | Mercerized pulp | 0 | 70 | PVA fiber(>100°C) | 30 | PAE | 0.12 | 69.4 | 30.6 | 61.0 | 36.2 | 0.593 | 34.0 | 50 | 10.5 | 27.2 | 140 |
| Example17 | Mercerized pulp | 0 | 85 | Vinylon fiber | 15 | PAE | 0.26 | 83.9 | - | 49.6 | 33.2 | 0.669 | 210.0 | 55 | 12.0 | 25.0 | 240 |
| Comparison7 | Mercerized pulp | 0 | 70 | Vinylon fiber | 20 | none | 0 | 69.6 | 9.9 | 60.5 | 37.6 | 0.621 | 39.5 | 45 | 1.5 | 23.6 | 160 |
| | | | | PVA fiber(>100°C) | 10 | | | | | | | | | | | | |
| Comparison8 | Mercerized pulp | 0 | 70 | Vinylon fiber | 20 | PAPAE | 0.12 | 69.3 | 10.2 | 60.4 | 37.0 | 0.613 | 38.0 | 48 | 6.5 | 27.3 | 175 |
| | | | | PVA fiber(>100°C) | 10 | | | | | | | | | | | | |
| Comparison9 | Mercerized pulp | 0 | 70 | Vinylon fiber | 20 | none | 0 | 68.8 | 10.1 | 52.6 | 36.8 | 0.700 | 68.0 | 58 | 10.1 | 73.5 | 150 |
| | | | | OVA fiber(80°C) | 10 | | | | | | | | | | | | |

| | | | | | | | | | | | | | | | | | |
|---|---|---|---|---|---|---|---|---|---|---|---|---|---|---|---|---|---|
| PAE : polyamine-epichlorohydrin resin PAPAE : polyamide-polyamine-epichlorohydrin resin PVA fiber : polyvinyl alcohol fiber, ( ) represents dissolution temperature in water. | | | | | | | | | | | | | | | | | |

### [Example 18]

60% by weight of lyocell fibers (TENCEL produced by Lenzing Fibers Limited, fiber diameter: 1.7 dtex; fiber length: 4 mm) was beaten by a double disc refiner to 120 ml CSF. Thereafter, 40% by weight of vinylon fibers (FFN fibers produced by Unitika Ltd., fiber diameter: 0.6 dtex; fiber length: 3 mm) was mixed into the beaten lyocell fibers. Next, the polyamine-epichlorohydrin resin (wet strength agent WS4010 produced by Seiko PMC Corporation) was added to the total weight of the mixed fibers to obtain a raw material which contains 0.25% by weight of the resin in terms of resin solid content. Such raw material was used to perform paper-making process by a cylinder paper machine to obtain a separator with a thickness of 100.6 µm, a basis weight of 32.7 g/m², and a density of 0.325 g/cm³.

### [Example 19]

60% by weight of lyocell fibers (TENCEL produced by Lenzing Fibers Limited, fiber diameter: 1.7 dtex; fiber length: 4 mm) was beaten by a double disc refiner to 120 ml CSF. Thereafter, 25% by weight of vinylon fibers (FFN fibers produced by Unitika Ltd., fiber diameter: 0.6 dtex; fiber length: 3 mm) and 15% by weight of poorly-soluble polyvinyl alcohol fibers (AH fibers produced by Unitika Ltd., fiber diameter: 1.1 dtex; fiber length: 2 mm; dissolution temperature in water: 99°C) were mixed into the beaten lyocell fibers. Next, the polyamine-epichlorohydrin resin (wet strength agent WS4010 produced by Seiko PMC Corporation) was added to the total weight of the mixed fibers to obtain a raw material which contains 0.25% by weight of the resin in terms of resin solid content. Such raw material was used to perform paper-making process by a cylinder paper machine to obtain a separator with a thickness of 100.5 µm, a basis weight of 33.1 g/m², and a density of 0.329 g/cm³.

### [Example 20]

60% by weight of lyocell fibers (TENCEL produced by Lenzing Fibers Limited, fiber diameter: 1.7 dtex; fiber length: 4 mm) was beaten by a double disc refiner to 120 ml CSF. Thereafter, 35% by weight of vinylon fibers (FFN fibers produced by Unitika Ltd., fiber diameter: 0.6 dtex; fiber length: 3 mm) and 5% by weight of readily-soluble polyvinyl alcohol fibers (SML fibers produced by Unitika Ltd., fiber diameter: 1.1 dtex; fiber length: 3 mm; dissolution temperature in water: 70°C) were mixed into the beaten lyocell fibers. Next, the polyamine-epichlorohydrin resin (wet strength agent WS4010 produced by Seiko PMC Corporation) was added to the total weight of the mixed fibers to obtain a raw material which contains 0.25% by weight of the resin in terms of resin solid content. Such raw material was used to perform paper-making process by a cylinder paper machine to obtain a separator with a thickness of 95.4 µm, a basis weight of 33.0 g/m², and a density of 0.346 g/cm³.

### [Example 21]

The same raw material as Example 18 was used except that the content of the lyocell fibers and the content of the vinylon fibers were both 50% by weight. Such raw material was used to perform paper-making process by a cylinder paper machine to obtain a separator with a thickness of 107.1 µm, a basis weight of 33.1 g/m², and a density of 0.309 g/cm³.

### [Example 22]

The same raw material as Example 18 was used except that the content of the lyocell fibers was 80% by weight, and the content of the vinylon fibers was 20% by weight. Such raw material was used to perform paper-making process by a cylinder paper machine to obtain a separator with a thickness of 90.3 µm, a basis weight of 33.4 g/m², and a density of 0.370 g/cm³.

### [Example 23]

100% by weight of lyocell fibers (TENCEL produced by Lenzing Fibers Limited, fiber diameter: 1.7 dtex; fiber length: 4 mm) was beaten by a double disc refiner to 120 ml CSF. Thereafter, the polyamine-epichlorohydrin resin (wet strength agent WS4010 produced by Seiko PMC Corporation) was added to the beaten lyocell fibers to obtain a raw material which contains 0.25% by weight of the resin in terms of resin solid content. Such raw material was used to perform paper-making process by a cylinder paper machine to obtain a separator with a thickness of 78.9 µm, a basis weight of 33.2 g/m², and a density of 0.421 g/cm³.

### [Example 24]

60% by weight of lyocell fibers (TENCEL produced by Lenzing Fibers Limited, fiber diameter: 1.7 dtex; fiber length: 4 mm) was beaten by a double disc refiner to 50 ml CSF. Thereafter, 20% by weight of vinylon fibers (FFN fibers produced by Unitika Ltd., fiber diameter: 0.6 dtex; fiber length: 3 mm) and 20% by weight of unbeaten lyocell fibers (TENCEL produced by Lenzing Fibers Limited, fiber diameter: 1.7 dtex; fiber length: 4 mm) were mixed into the beaten lyocell fibers. Next, the polyamine-epichlorohydrin resin (wet strength agent WS4010 produced by Seiko PMC Corporation) was added to the total weight of the mixed fibers to obtain a raw material which contains 0.25% by weight of the resin in terms of resin solid content. Such raw material was used to perform paper-making process by a cylinder paper machine to obtain a separator with a thickness of 100.2 µm, a basis weight of 32.3 g/m², and a density of 0.322 g/cm³.

### [Example 25]

80% by weight of lyocell fibers (TENCEL produced by Lenzing Fibers Limited, fiber diameter: 1.7 dtex; fiber length: 4 mm) was beaten by a double disc refiner to 10 ml CSF. 20% by weight of vinylon fibers (FFN fibers produced by Unitika Ltd., fiber diameter: 0.6dtex; fiber length: 2mm) was mixed into the beaten lyocell fibers. Next, the polyamine-epichlorohydrin resin (wet strength agent WS4010 produced by Seiko PMC Corporation) was added to the total weight of the mixed fibers to obtain a raw material which contains 0.25% by weight of the resin in terms of resin solid content. Such raw material was used to perform paper-making process by a Fourdrinier paper machine to obtain a separator with a thickness of 51.0 µm, a basis weight of 26.0 g/m², and a density of 0.510 g/cm³.

Incidentally, in Example 25, in order to prevent the wet paper from floating from the surface of the dryer during the time when drying the separator after the paper-making process had been performed by the Fourdrinier paper machine, the separator was dried while being pressed against the surface of the dryer by a dryer felt. The airtightness of Example 25 is 178 sec/100 ml (measured by a modified measuring method); when the value of the airtightness measured by the modified measuring method is equal to or larger than 100 sec/100ml, in order to prevent the wet paper from floating off the surface of the dryer when performing drying process, the wet paper may be dried while being held down.

### [Comparative Example 10]

A raw material obtained by mixing the lyocell fibers and the vinylon fibers totally identical to those used in Example 18, but without adding the polyamine-epichlorohydrin resin, was used to perform paper-making process by a cylinder paper machine to obtain a separator with a thickness of 100.1 µm, a basis weight of 32.4 g/m², and a density of 0.324 g/cm³.

### [Comparative Example 11]

Instead of the polyamine-epichlorohydrin resin of Example 19, the polyamide-polyamine-epichlorohydrin resin (wet strength agent WS4020 produced by Seiko PMC Corporation) was added into a material obtained by mixing the lyocell fibers, the vinylon fibers and the poorly-soluble polyvinyl alcohol fibers totally identical to those used in Example 19 to obtain a raw material which contains 0.25% by weight of the resin in terms of resin solid content. Such raw material was used to perform paper-making process by a cylinder paper machine to obtain a separator with a thickness of 100.1 µm, a basis weight of 33.1 g/m², and a density of 0.331 g/cm³.

### [Comparative Example 12]

Instead of the poorly-soluble polyvinyl alcohol fiber of Example 19, the readily-soluble polyvinyl alcohol fibers (SML fibers produced by Unitika Ltd., fiber diameter: 1.1 dtex; fiber length: 3 mm; dissolution temperature in water: 70°C) were mixed into the beaten fibers, without adding the polyamine-epichlorohydrin resin, to obtain a raw material; and the raw material was used to perform paper-making process by a cylinder paper machine to obtain a separator with a thickness of 90.5 µm, a basis weight of 32.8 g/m², and a density of 0.362 g/cm³.

Various measured data of the separators obtained by Examples 18 to 25 and Comparative Examples 10 to 12 is shown in Table 6.

**[Table 6]**

| Separator | Cellulose fiber | | | Synthetic fiber | | Added resin | | Cellulose content | PVA content | Thickness | Basis weight | Density | Airtightness | Dry strength | Wet strength | Electrical resistance | Hydrogen gas yield |
|---|---|---|---|---|---|---|---|---|---|---|---|---|---|---|---|---|---|
| | Type | CSF (ml) | 1% | Type | % | Type | % | % | % | *µ*m | g/m² | g/cm³ | Modified measuring method(sec/100ml) | N/1 5mm | N/15mm | mΩ | *µ*l/g |
| Example18 | Lyocell fiber | 120 | 60 | Vinylon fiber | 40 | PAE | 0.25 | 60.7 | | 100.6 | 32.7 | 0.325 | 15.4 | 25 | 8.8 | 10.3 | 180 |
| Example19 | Lyocell fiber | 12a | 60 | Vinylon fiber | 25 | PAE | 0.25 | 61.0 | 15.7 | 100.5 | 33.1 | 0.329 | 15.6 | 27 | 9.6 | 10.5 | 110 |
| | | | | PVA fiber(99°C) | 15 | | | | | | | | | | | | |
| Example20 | Lyocell fiber | 120 | 60 | Vinylon fiber | 35 | PAE | 0.25 | 60.1 | 4.7 | 95.4 | 33.0 | 0.346 | 17.1 | 35 | 11.9 | 12.8 | 130 |
| | | | | PVA fiber(70°C) | 5 | | | | | | | | | | | | |
| Example21 | Lyocell fiber | 120 | 50 | Vinylon fiber | 50 | PAE | 0.25 | 50.6 | - | 107.1 | 33.1 | 0.309 | 10.4 | 21 | 6.2 | 9.3 | 180 |
| Example22 | Lyocell fiber | 120 | 80 | Vinylon fiber | 20 | PAE | 0.25 | 80.7 | - | 90.3 | 33.4 | 0.370 | 35.1 | 28 | 10.5 | 11.6 | 180 |
| Example23 | Lyocell fiber | 120 | 100 | none | 0 | PAE | 0.25 | 98.8 | - | 78.9 | 33.2 | 0.421 | 65.6 | 30 | 10.8 | 11.8 | 190 |
| Example24 | Lyocell fiber | 50 | 60 | Vinylon fiber | 20 | PAE | 0.25 | 80.4 | - | 100.2 | 32.3 | 0.322 | 28.5 | 24 | 9.6 | 10.2 | 180 |
| | Lyocell fiber | unbeaten | 20 | | | | | | | | | | | | | | |
| Example25 | Lyocell fiber | 10 | 80 | Vinylon fiber | 20 | PAE | 0.25 | 79.1 | - | 51.0 | 26.0 | 0.510 | 178 | 25 | 7.5 | 9.8 | 180 |
| Comparison10 | Lyocell fiber | 120 | 60 | Vinylon fiber | 40 | none | 0 | 60.6 | - | 100.1 | 32.4 | 0.3241 | 15.2 | 23 | 1.0 | 9.5 | 160 |
| Comparison11 | Lyocell fiber | 120 | 60 | Vinylon fiber | 25 | PAPAE | 0.25 | 60.5 | 15.5 | 100.1 | 33.1 | 0.331 | 15.6 | 26 | 7.6 | 10.6 | 120 |
| | | | | PVA fiber(99°C) | 15 | | | | | | | | | | | | |
| Comparison12 | Lyocell fiber | 120 | 60 | Vinylon fiber | 25 | none | 0 | 60.2 | 14.9 | 90.5 | 32.8 | 0.362 | 28.6 | 38 | 10.1 | 19.8 | 110 |
| | | | | PVA fiber(70°C) | 15 | | | | | | | | | | | | |

| | | | | | | | | | | | | | | | | | |
|---|---|---|---|---|---|---|---|---|---|---|---|---|---|---|---|---|---|
| PAE : polyamine-epichlorohydrin resin PAPAE : polyamide-polyamine-epichlorohydrin resin PVA fiber : polyvinyl alcohol fiber, ( ) represents dissolution temperature in water. | | | | | | | | | | | | | | | | | |

### [Example 26]

60% by weight of mercerized softwood pulp (HPZ pulp, produced by Buckeye Technologies Inc.) was beaten by a double disc refiner to 100 ml CSF. Thereafter, 20% by weight of vinylon fibers (FFN fibers produced by Unitika Ltd., fiber diameter: 0.6 dtex; fiber length: 3 mm) and 20% by weight of rayon fibers (SB fibers produced by Daiwabo Rayon Co., Ltd., fiber diameter: 0.8 dtex; fiber length: 4 mm) were mixed into the beaten pulp. Next, the polyamine-epichlorohydrin resin (wet strength agent WS4010 produced by Seiko PMC Corporation) was added to the total weight of the mixed fibers to obtain a raw material which contains 0.20% by weight of the resin in terms of resin solid content. Such raw material was used to perform paper-making process by a cylinder paper machine to obtain a separator with a thickness of 81.2 µm, a basis weight of 33.3 g/m², and a density of 0.410 g/cm³.

### [Example 27]

65% by weight of linter pulp was beaten by a double disc refiner to 150 ml CSF. 35% by weight of vinylon fibers (FFN fibers produced by Unitika Ltd., fiber diameter: 0.6dtex; fiber length: 3mm) were mixed into the beaten linter pulp. Next, the polyamine-epichlorohydrin resin (wet strength agent WS4010 produced by Seiko PMC Corporation) was added to the total weight of the mixed fibers to obtain a raw material which contains 0.10% by weight of the resin in terms of resin solid content. Such raw material was used to perform paper-making process by a cylinder paper machine to obtain a separator with a thickness of 122.4 µm, a basis weight of 45.2 g/m², and a density of 0.369 g/cm³. [Example 28]

80% by weight of lyocell fibers (TENCEL produced by Lenzing Fibers Limited, fiber diameter: 1.7 dtex; fiber length: 4 mm) and 20% by weight of high alpha-cellulose hardwood pulp (whose crystal structure was cellulose I only, and whose content of alpha-cellulose was 98.2%) were mixed with each other, and beaten by a double disc refiner to 300 ml CSF. Thereafter, 30% by weight of vinylon fibers (FFN fibers produced by Unitika Ltd., fiber diameter: 0.6 dtex; fiber length: 2 mm) and 10% by weight of poorly-soluble polyvinyl alcohol fibers (AH fibers produced by Unitika Ltd., fiber diameter: 1.1 dtex; fiber length: 2 mm; dissolution temperature in water: 99°C) were mixed into the beaten material. Next, the polyamine-epichlorohydrin resin (wet strength agent WS4010 produced by Seiko PMC Corporation) was added to the total weight of the mixed fibers to obtain a raw material which contains 0.40% by weight of the resin in terms of resin solid content. Such raw material was used to perform paper-making process by a cylinder paper machine to obtain a separator with a thickness of 95.3 µm, a basis weight of 36.7 g/m², and a density of 0.385 g/cm³.

### [Example 29]

30% by weight of mercerized softwood pulp (HPZ pulp, produced by Buckeye Technologies Inc.) and 20% by weight of lyocell fibers (TENCEL produced by Lenzing Fibers Limited, fiber diameter: 1.7 dtex; fiber length: 4 mm) were mixed with each other, and beaten by a double disc refiner to 250 ml CSF. Thereafter, 30% by weight of vinylon fibers (FFN fibers produced by Unitika Ltd., fiber diameter: 0.6 dtex; fiber length: 3 mm), 17% by weight of nylon-6 fibers (fiber diameter: 0.6 dtex; fiber length: 3 mm), and 3% by weight of readily-soluble polyvinyl alcohol fibers (SML fibers produced by Unitika Ltd., fiber diameter: 1.1 dtex; fiber length: 3 mm; dissolution temperature in water: 70°C) were mixed into the beaten material. Next, the polyamine-epichlorohydrin resin (wet strength agent WS4010 produced by Seiko PMC Corporation) was added to the total weight of the mixed fibers to obtain a raw material which contains 0.20% by weight of the resin in terms of resin solid content. Such raw material was used to perform paper-making process by a cylinder paper machine to obtain a separator with a thickness of 92.3 µm, a basis weight of 33.2 g/m², and a density of 0.360 g/cm³.

Various measured data of the separators obtained by Examples 26 to 29 is shown in Table 7.

**[Table 7]**

| Separator | Cellulose fiber | | | Synthetic fiber | | Added resin | | Cellulose content | PVA content | Thickness | Basis weight | Density | Airtightness | Dry strength | Wet strength | Electrical resistance | Hydrogen gas yield |
|---|---|---|---|---|---|---|---|---|---|---|---|---|---|---|---|---|---|
| | Type | CSF (ml) | % | Type | % | Type | % | % | % | *µ*m | g/m² | g/cm³ | Modified measuring method sec/1 00ml) | N/15mm | N/15mm | mΩ | *µ*l/g |
| Example26 | Mercerized pulp | 100 | 60 | Vinylon fiber | 20 | PAE | 0.20 | 81.4 | - | 81.2 | 33.3 | 0.410 | 15.8 | 30 | 12.3 | 16.2 | 250 |
| | Rayon fiber | unbeaten | 20 | | | | | | | | | | | | | | |
| Example27 | Linter pulp | 150 | 65 | Vinylon fiber | 35 | PAE | 0.10 | 65.9 | - | 122.4 | 45.2 | 0.369 | 35.2 | 42 | 11.3 | 25.3 | 190 |
| Example28 | Lyocell fiber | 300 | 20 | Vinylon fiber | 30 | PAE | 0.40 | 61.1 | 10.7 | 95.3 | 36.7 | 0.385 | 12.3 | 24 | 12.1 | 15.0 | 140 |
| | High alpha LBKP | | 40 | PVA fiber(99°C) | 10 | | | | | | | | | | | | |
| Example29 | Mercerized pulp | 250 | 30 | Vinylon fiber | 30 | PAE | 0.20 | 50.9 | 3.2 | 92.3 | 33.2 | 0.360 | 8.5 | 35 | 14.2 | 14.8 | 150 |
| | Lyocell fiber | | 20 | Nyron-6 fiber | 17 | | | | | | | | | | | | |
| | | | | PVA fiber(70°C) | 3 | | | | | | | | | | | | |

| | | | | | | | | | | | | | | | | | |
|---|---|---|---|---|---|---|---|---|---|---|---|---|---|---|---|---|---|
| PAE : polyamine-epichlorohydrin resin PVA fiber : polyvinyl alcohol fiber: ( ) represents dissolution temperature in water. | | | | | | | | | | | | | | | | | |

Various measured data of the separators obtained by Examples and Comparative Examples were measured by the following methods.

### (1) CSF (Canadian Standard Freeness)

CSF was measured by a method for measuring Canadian Standard Freeness specified in JIS P 8121.

### (2) Thickness

The thickness of the separator was measured by: superimposing 10 pieces of separators, one on the top of one another, measuring the thickness of the superimposed 10 pieces of separators at several places equally spaced from each other with an external micrometer (spindle diameter: 6.35 mm; measurement length: 25 mm or less; measuring force: 4.9±0.49 N) specified in JIS B 7502, multiplying the measured thickness of each place by 1/10 to obtain the thickness of one measured piece of separator, and further, obtaining an average thickness of all measured places, which was regarded as the thickness of the separator.

### (3) Basis weight

The basis weight was obtained by measuring the area and weight of the separator, and calculating the weight (g) per area (m²) of the separator.

### (4) Tensile strength (dry strength)

The tensile strength was obtained by measuring the longitudinal tensile strength of the separator by the method specified in JIS P 8113.

### (5) Wet strength

The wet strength was obtained by taking a test piece of 15 mm in width from a separator in machine direction, immersing the test piece in a 40% aqueous solution of KOH, absorbing excess 40% aqueous solution of KOH adhered on the test piece with a filter paper or the like, and then measuring the tensile strength of the test piece moistened with the 40% aqueous solution of KOH by a method specified in JIS P 8113, and the measured tensile strength was regarded as the wet strength of the separator. Further, the test piece was also immersed in the 40% aqueous solution of KOH for 10 days, and then the tensile strength of the test piece was measured in the same manner, and the measured tensile strength was regarded as the wet strength of the separator after being immersed in the 40% aqueous solution for long time (see Table 8).

### (6) Airtightness

Since the airtightness of the separator varies greatly depending on the beating degree of the cellulose fibers, the airtightness was measured by two methods described below.

### [Basic measuring method]

The separator was pressed against a test piece mouting portion (an inner hole having an area of 645.16 mm²) of a B-type measuring device of JIS P 8117 (paper and board-determination of air permeance) to measure the time required for 100 ml of air to pass through the portion of the separator conforming the area of 645.16 mm² (the unit of the measured result: min/100ml).

### [Modified measuring method]

The device used in the modified measuring method is identical to that used in the basic measuring method; however, in the modified measuring method, a bore having a diameter of 6 mm is mounted on the test piece mounting portion of the B-type measuring device, and the time required for 100 ml of air to pass through the portion of the separator conforming the area of the diameter 6 mm (an area of 28.26 mm²) was measured (the unit of the measured result: min/100ml).

### (7) Electrical resistance

The separator was inserted, in parallel with each other at a distance of about 2 mm, into between two platinum electrodes (20 mm diameter disk-like electrodes coated with platinum black) immersed in 40% aqueous solution of KOH, and the increase of the electrical resistance between the electrodes when the separator was inserted was regarded as the electrical resistance of the separator. Incidentally, the electrical resistance between the two electrodes was measured using an LCR meter at a frequency of 1000 Hz.

### (8) Hydrogen gas yield

The separator and a KOH electrolyte (in which zinc oxide is dissolved) were added into commercially available zinc alloy powder (into which aluminium (Al), bismuth (Bi) and indium (In) are added) for the negative electrode of an alkaline manganese battery, and the amount of the hydrogen gas (i.e., the volume (unit: µl) of the hydrogen gas generated per 1g of zinc) generated after 10 days had elapsed at 70°C was measured.

### (9) Content of resin

The content of the polyamine-epichlorohydrin resin and the polyamide-polyamine-epichlorohydrin resin of the separator was obtained by measuring the contents of nitrogen contained in the raw material of the separator before and after the resin had been added, and obtaining the amount of the resin fixed to the raw material based on the difference of the contents of nitrogen to calculate the content of the polyamine-epichlorohydrin resin and the polyamide-polyamine-epichlorohydrin resin of the separator.

### (10) Content of the fibers (the cellulose fibers and the polyvinyl alcohol fibers) contained in the separator

The content of the cellulose fiber was obtained by dissolving the synthetic fibers and obtaining the content of the cellulose fiber from the weight of the residue, by a method called a "20% hydrochloric acid process" specified in JIS L 1030-2: 2005 (Testing methods for quantitative analysis of fiber mixtures of textiles-Part 2: Testing methods for quantitative analysis of fiber mixtures). In the "copper oxide ammonia method" used in cellulose analysis, since the cellulose fibers contained in the separator of the present invention is difficult to dissolve, the residue obtained when dissolving the synthetic fibers is regarded as the content of the cellulose fiber. This is presumably because in the separator of the present invention, since the polyamine-epichlorohydrin resin is bound to the hydroxyl group of the cellulose so as to form cross-links between fibers, the cellulose fibers become difficult to dissolve. The vinylon and nylon of the synthetic fibers can be dissolved in the 20% hydrochloric acid process.
The content of the readily-soluble polyvinyl alcohol fibers was obtained by immersing the separator in 85°C water to completely dissolve the readily-soluble polyvinyl alcohol fibers, and calculating the content of the readily-soluble polyvinyl alcohol fibers based on the reduction of the weight of the separator.
The content of the poorly-soluble polyvinyl alcohol fibers was obtained by sealing the separator, together with 100 times its mass of water, into a pressure resistant vessel, heating the pressure resistant vessel to 115°C or higher to completely dissolve the poorly-soluble polyvinyl alcohol fibers, and calculating the content of the poorly-soluble polyvinyl alcohol fibers based on the reduction of the weight of the separator. Incidentally, when dissolving the poorly-soluble polyvinyl alcohol fibers, the vinylon fibers were also slightly dissolved; therefore the vinylon fibers were also subjected to a dissolving test in the same condition to obtain the reduction of the weight of the blended vinylon fibers, and the reduction of the weight of the blended vinylon fibers was used to correct the content of the poorly-soluble polyvinyl alcohol fibers in the separator.

Next, the various Examples and Comparative Examples will be discussed below. As shown in Table 4, Examples 1 to 3 are separators in which 0.05% by weight (Example 1), 0.15% by weight (Example 2) and 0.50% by weight (Example 3) of polyamine-epichlorohydrin resin (referred to as "PAE resin" hereinafter), in terms of resin solid content, were respectively added to a raw material obtained by mixing 50% by weight of mercerized pulp at 100 ml CSF with 50% by weight of vinylon fibers; while Comparative Example 1 is a separator in which the same raw material as that of Examples 1 to 3 was used but without adding PAE resin. The wet strength of Comparative Example 1 was 1.5 N/15mm; while the wet strength of Examples 1 to 3 was increased to 6.0 N/15mm (Example 1), 10.6 N/15mm (Example 2) and 17.9 N/15mm (Example 3) due to the addition of the PAE resin.

The wet strengths of Examples 1 to 3 are all higher than 5.0 N/15mm, wherein the wet strength of Example 2 is substantially equal to the wet strength 11.3 N/15mm of Comparative Example 6, which is a conventional separator into which 10% by weight of readily-soluble polyvinyl alcohol fibers is blended, and the wet strength of Example 3 is considerably higher than Comparative Example 6. Thus, it is known that Examples 1 to 3 each have a wet strength possible to be used as a separator.

Further, the wet strength of the separator of Comparative Example 2, in which the same raw material as those of Examples 1 to 3 was used except that the content of the PAE resin was 0.02% by weight, was 2.0 N/15mm. Based on this fact, it is known that in order to obtain a wet strength of 5 N/15mm (which is a necessary wet strength) by adding the PAE resin, it is necessary to add the PAE resin so that the content of the PAE resin is equal to at least 0.05% by weight. On the other hand, in the separator of Comparative Example 3, in which the same raw material as those of Examples 1 to 3 was used except that the content of the PAE resin was increased to 0.70% by weight, the wet strength was increased to 21.0 N/15mm, however the electrical resistance of the separator was increased to 20.8 mΩ, and the hydrogen gas yield was greatly was increased up to 410 ul/g. Based on this fact, it is known that it is preferred that the content of the PAE resin is not larger than 0.5% by weight.

On the other hand, the hydrogen gas yield of the separator increases in proportion to the increase of the PAE resin, in the order of: 190 µl/g (Comparative Example 1), 200 µl/g (Comparative Example 2), 210 µl/g (Example 1), 240 µl/g (Example 2), 300 µl/g (Example 3). However, in Example 3, in which the content of PAE resin is 0.50% by weight, the hydrogen gas yield is 300 µl/g, which falls within a range that does not hinder to use the separator as a separator for alkaline battery. Thus, if the content of the PAE resin is not more than 0.5% by weight, the hydrogen gas yield caused by the corrosion of the mercury-unadded zinc alloy negative electrode resulting from the PAE resin can also be maintained at a level that does not hinder to use the separator as a separator for alkaline battery.

In the separators of Comparative Example 4 and Comparative Example 4, instead of the PAE resin, the polyamide-polyamine-epichlorohydrin resin (referred to as "PAPAE resin" hereinafter), which is identical to the "Kymene 557" (trade name, manufactured by DIC-Hercules chemicals Inc.) disclosed in Patent Document 4, is added. The content of resin of Example 2 and the content of resin of Comparative Example 4 are both 0.15% by weight, however the wet strength of Comparative Example 4 is only 8.1 N/15mm, in comparison with Example 2 in which the wet strength is 10.6 N/15mm. Further, the content of resin of Example 3 and the content of resin of Comparative Example 5 are both 0.50% by weight, however the wet strength of Comparative Example 5 is only 14.0 N/15mm, in comparison with Example 3 in which the wet strength is 17.9 N/15mm. Based on this fact, it is known that, compared to the conventional PAPAE resin, the PAE resin used in the present invention has larger effect on improving the wet strength of the separator. Note that the measured values of the wet strength described in Tables 4 to 7 are values obtained by measuring the separator immediately after being immersed in a 40% aqueous solution of KOH, instead of being measured values of the separator after being immersed in a 40% aqueous solution of KOH for long time. If the separator has been immersed in the strong alkaline electrolyte (which comprises a 30% to 40% aqueous solution of potassium hydroxide) used in the alkaline battery for long time, the amide group of the PAPAE resin will be gradually hydrolyzed, so that the wet strength of the separator will decrease, and thereby the separator does not always have sufficient alkali-resistance when being used as a separator for alkaline battery. The details of these facts will be discussed later.

Similar to Example 2, in the separators of Examples 4 to 6, 50% by weight of mercerized pulp was blended, and 0.15% by weight of the PAE resin was added. However, in the separators of Examples 4 to 6, 50% by weight of vinylon fibers blended were partially replaced by the poorly-soluble polyvinyl alcohol fibers (referred to as "poorly-soluble PVA fibers" hereinafter) whose dissolution temperature in water is 99°C. Compared to the hydrogen gas yield 240 µl/g of Example 2, in which 0.15% by weight of the PAE resin was added but the poorly-soluble PVA fiber was not blended, the hydrogen gas yield of Example 4, in which 5% by weight of poorly-soluble PVA fibers were blended, was 170 µl/g, and the hydrogen gas yield of Example 5, in which 25% by weight of poorly-soluble PVA fibers were blended, was 130 µl/g. Based on this fact, it is known that the hydrogen gas yield is reduced by blending poorly-soluble PVA fibers into the raw material. On the other hand, in Example 6, in which the content of the poorly-soluble PVA fibers was further increased up to 40% by weight, the hydrogen gas yield was 170 µl/g, which is a value higher than that of Example 5. Based on this fact, it is known that when the blending ratio of the poorly-soluble PVA fibers exceeds a certain level, the hydrogen gas yield of the separator will change from decrease to increase. Thus, based on Examples 4 to 6, it can be concluded that the blending ratio of the poorly-soluble PVA fibers (which is added in order to suppress the hydrogen gas resulting from the PAE resin) is preferably in a range of 5% to 40% by weight. By adding the poorly-soluble PVA fiber within such range, the generation of the hydrogen gas resulting from the PAE resin can be reduced to lower level.

The separator of Comparative Example 6 corresponds to a conventional separator which has readily-soluble polyvinyl alcohol fibers (referred to as "readily-soluble PVA fibers" hereinafter) blended thereinto so that fibers are bound to each other, wherein the readily-soluble polyvinyl alcohol fibers have a dissolution temperature of 60°C to 90°C in water. The separator of Comparative Example 6 differs from the separator of Example 2 in that 10% by weight of vinylon fibers of Example 2 was replaced by the readily-soluble PVA fibers, and neither PAE resin nor PAPAE resin were added. In Comparative Example 6, the density of the separator is increased up to 0.524 g/cm³, and the airtightness of the separator is also increased up to 82 sec/100ml. Further, in Comparative Example 6, the electrical resistance is significantly increased up to 27.2 mΩ, compared with Example 2 in which the electrical resistance is 17.8 mΩ, which is a relatively small value. This is because in the separator of Comparative Example 6, the readily-soluble PVA fibers blended thereinto are dissolved between fibers of the separator so as to fill up the void and plug the pores of the separator, and therefore the density, the airtightness and particularly the electrical resistance are increased.

On the other hand, in Example 2, the wet strength is 10.6 N/15mm, compared with Comparative Example 6 in which the wet strength is 11.3 N/15mm. Based on this fact, it is known that, with the separator of the present invention which contains PAE resin, it is possible to achieve substantially the same level of wet strength as the conventional separator.

Examples 7 to 9 have the same composition as that of Example 2 except that the freeness of mercerized pulp is 50 lm CSF (Example 7), 300 lm CSF (Example 8), and 480 lm CSF (Example 9). In Example 7, which has a high beating degree of 50 mm CSF, the dry strength is 40 N/15mm and the wet strength is 12.3 N/15mm, which are relatively large, and therefore the separator has large strength and is less subject to break. While in Example 9, which has a low beating degree of 480 mm CSF, the dry strength is 23 N/15mm and the wet strength is 6.2 N/15mm; and therefore the mechanical strength of the separator is relatively small compared with Examples 7 and 8.

When incorporating the separator into the battery, since the separator needs to be formed into a cylindrical shape so as to be inserted into the battery, the separator needs to have sufficient mechanical strength. Generally, the necessary dry strength is equal to or larger than 20 N/15mm, depending on the battery production line. Thus, it is preferred that the freeness of the cellulose fiber (such as the mercerized pulp or the like) used in the present invention is equal to or smaller than 500 ml.

Incidentally, in Examples 8 and 9, in which mercerized pulp having large CSF value are used, the airtightness of the separator is reduced to 5.6 sec/100ml for Example 8 and 3.2 sec/100ml for Example 9. As can be known from Patent Documents 1 to 3, when a separator having small airtightness is used in the alkaline battery, the alkaline battery is more subject to short-circuit caused by dendrite. Short-circuit caused by dendrite is not likely to become a problem when the battery is used under heavy load (such as being used in a digital camera where heavy load discharge is performed); however, short-circuit caused by dendrite is likely to become a problem particularly when the battery is used under light load for long time longer than one year (such as being used in a table clock and the like) or intermittently used under light load for long time. The separator with large airtightness has large effect on shielding dendrite, and therefore is preferred. Incidentally, it is particularly preferred that the airtightness of the separator is equal to or larger than 3 sec/100ml, as airtightness measured by the modified measuring method.

Compared with Example 2, the blending ratio of the mercerized pulp of the separator in Examples 10 to 12 is changed to 40% by weight (Example 10), 70% by weight (Example 11), and 100% by weight (Example 12); and in accordance with the change of the blending ratio of the mercerized pulp, the blending ratio of the vinylon fibers of the separator in Examples 10 to 12 is also changed to 60% by weight (Example 10), 30% by weight (Example 11), and 0% by weight (Example 12). In Example 10, in which the blending ratio of the mercerized pulp is 40% by weight, since the blending ratio of the cellulose fibers (which associated with the bonding between fibers) is reduced, the density, the airtightness, the dry strength, the wet strength and the electrical resistance of the separator are all reduced compared with Example 2, Example 11 and Example 12 which have the same content (0.15% by weight) of PAE resin as Example 10. In such a case where the blending ratio of the cellulose fibers (such as the mercerized pulp or the like) is reduced, the physical properties of the separator change in the same manner as the case of Example 9, in which the cellulose fibers are lightly beaten to a low beating degree of 480 lm CSF. In the case where binder is not used, the dry strength of the separator is basically contributed by mutual hydrogen-bonding between cellulose fibers, and therefore, considering the case where the cellulose fibers are lightly beaten, if the content of the cellulose fibers is less than 40% by weight, the dry strength will decrease. Further, even if the cellulose fibers are highly beaten, it is preferred that the blending ratio of the cellulose fiber is equal to or higher than 40% by weight from the viewpoint of maintaining high dry strength. This is because if the content of the cellulose fibers contained in the separator is reduced, the dry strength will decease, and thereby there is a possibility that when winding the separator into circular tube, problems such as breaking of the separator might occur.

As shown in Table 5, the separators in Examples 13 to 17 and Comparative Examples 7 to 9 are each a separator in which highly beaten mercerized pulp having a freeness of 0 ml CSF is used. Since the mercerized pulp beaten to 0 ml CSF is a raw material with poor water filtration performance, a Fourdrinier paper machine, which has a paper-making wire with long water filtration time, was used to perform paper-making process.

The separators of Examples 13 to 16 each include 70% by weight of mercerized pulp with a constant content of PAE resin of 0.12% by weight, wherein the rest of balance for each example is: 30% by weight of vinylon fibers (Example 13), 20% by weight of vinylon fibers and 10% by weight of poorly-soluble PVA fibers whose dissolution temperature in water is 100°C or higher (Example 14), 15% by weight of vinylon fibers and 15% by weight of poorly-soluble PVA fibers whose dissolution temperature in water is 100°C or higher (Example 15), and 30% by weight of poorly-soluble PVA fibers whose dissolution temperature in water is 100°C or higher (Example 15). The hydrogen gas yield of Example 13 is 230 µl/g; however, by adding poorly-soluble PVA fibers, the hydrogen gas yield is reduced to 170 µl/g for Example 14 and 130 µl/g for Example 15. On the other hand, in Example 16, in which 30% by weight of poorly-soluble PVA fibers are blended, the gas yield is 140 µl/g, which is a level slightly higher than that of Example 15, in which 15% by weight of poorly-soluble PVA fibers are blended. Such effect of reducing the hydrogen gas yield by blending the poorly-soluble PVA fibers is similar to that of Example 4, Example 5 and Example 6.

The separator of Comparative Example 7 is made of the same raw fibers as those of Example 14 except that no PAE resin is added in Comparative Example 7. The wet strength of Example 14 is 9.7 N/15mm, while the wet strength of Comparative Example 7 is 1.5 N/15mm, which is a significantly low value; therefore, it is known that even highly beaten cellulose fibers having a freeness of 0 ml CSF can gain sufficient wet strength by adding PAE resin. Further, the separator of Comparative Example 8 is made of the same raw fibers as those of Example 14 except that in Comparative Example 8, instead of PAE resin, the same content of PAPAE resin is added. The wet strength of Comparative Example 8 is 6.5 N/15mm, which is a relatively low level compared with that of Example 14 in which the wet strength is 9.7 N/15mm. Thus, in regard to the contribution to the wet strength of the separator, the PAE resin of the present invention is more effective and excellent compared with the conventional PAPAE resin.

The separator of Comparative Example 9 corresponds to a conventional separator which has readily-soluble PVA fibers blended thereinto so that fibers are bound to each other, wherein the readily-soluble PVA fibers have a dissolution temperature of 80°C in water. The separator of Comparative Example 9 differs from the separator of Example 13 or the separator of Example 14 in that 10% by weight of the vinylon fibers of Example 13 is replaced by the readily-soluble PVA fibers, or the poorly-soluble PVA fibers of Example 14 is replaced by the readily-soluble PVA fibers, and neither PAE resin nor PAPAE resin are added.

In the case where cellulose fibers beaten to 0 ml CSF are used, since the airtightness of the obtained separator is very high, in the paper-making process, the separator has to be dried while being held down on a dryer. The separators described in Table 5 are all produced by being continuously dried while pressing the separator sheet against the surface of the dryer with a dryer felt. Since the separator of Comparative Example 9 was dried after the added readily-soluble PVA fibers had been dissolved in the dryer, the separator was bound to the surface of the dryer or the dryer felt. Thus, it was not possible to produce the separator. Thus, the sheet bound on the surface of the dryer was peeled off, and the peeled separator pieces were used as the sample to confirm the physical properties. Similar to the separator of Comparative Example 9, the separators of Examples 13 to 16 also each contain 70% by weight of mercerized pulp; however, the airtightness of the separator of Comparative Example 9 is 68.0 min/100ml, which is a higher level that means the separator has poorer ventilation properties, compared with the separator of Comparative Examples 13 to 16 in which the airtightness is 40.0 to 34.0 min/100ml. Further, the electrical resistance of the separator of Comparative Example 9 is increased to 73.5 mΩ, compared with Examples 13 to 16 in which the electrical resistance is 27.0 to 27.2 mΩ.

Similar to the phenomenon of Comparative Example 6, the reason why the airtightness and the electrical resistance increase is because in the separator of Comparative Example 9, the readily-soluble PVA fibers blended thereinto are dissolved between fibers of the separator so as to fill up the void and plug the pores of the separator, and therefore the airtightness and the electrical resistance are increased.

Example 17 is a separator into which 85% by weight of mercerized pulp and 15% by weight of vinylon fiber are blended, and 0.26% by weight of PAE resin is added. Compared with Examples 13 to 16, into which 70% by weight of mercerized pulp is blended, in Example 17, the amount of the blended mercerized pulp is increased, and thereby the airtightness of the separator is increased to 210 min/100ml. However, the electrical resistance of Example 17 is 25 mΩ, which is a relatively small value. This is because, unlike the case of Comparative Example 9, in Example 17, no readily-soluble PVA fiber fills up the void and plugs the pores of the separator.

As shown in Table 6, Examples 18 to 25 and Comparative Examples 10 to 12 are separators in which lyocell fibers are used as the cellulose fibers. Example 18 is a separator in which 40% by weight of vinylon fibers (as the synthetic fibers) are mixed into 60% by weight of beaten lyocell fibers beaten to 120 ml CSF, and 0.25% by weight of PAE resin is added. On the other hand, Comparative Example 10 is a separator made of the same raw fibers as Example 18 except that no PAE resin is added. The wet strength of Example 18 is 8.8 N/15mm, while the wet strength of Comparative Example 10 is 1.0 N/15mm, which is a significantly low value; therefore, it is known that sufficient wet strength can be obtained by adding PAE resin.

Example 19 is a separator made of the same material as Example 18 except that 15% by weight of poorly-soluble PVA fibers (dissolution temperature in water: 99°C) are blended as a part of the synthetic fibers of Example 18. The hydrogen gas yield of Example 18 is 180 µl/g, while the hydrogen gas yield of Example 19 is 110 µl/g, which is lower than that of Example 18. Example 20 is a separator made of the same material as Example 18 except that 5% by weight of readily-soluble PVA fibers (dissolution temperature in water: 70°C) are blended as a part of the synthetic fibers of Example 18. Similar to the case of Example 19, the hydrogen gas yield of Example 20 is 130 µl/g, which is lower than that of Example 18. It can be known, based on this fact, that the readily-soluble PVA fibers and the poorly-soluble PVA fibers both have effect of reducing the gas yield of the separator. Particularly, as shown in Example 20, the effect of reducing the hydrogen gas yield can be obtained by adding 5% by weight of readily-soluble PVA fibers; therefore, it can be known that by adding 5% by weight of the readily-soluble PVA fibers, sufficient effect can be obtained to cause the hydrogen gas yield to reduce to lower level.

In the conventional separator for alkaline battery, 10% to 20% by weight of the readily-soluble PVA fibers having a dissolution temperature of 60°C to 90°C in water are blended to bind the fibers of the separator to each other. The electrical resistance of the separator of Example 20, into which 5% by weight of readily-soluble PVA fibers are blended, is 12.8 mΩ, which is increased compared with the electrical resistance of Example 18 (10.3 mΩ) and the electrical resistance of Example 19 (10.5 mΩ), however the increase of the electrical resistance is vary small. On the other hand, by adding 5% by weight of readily-soluble PVA fibers, the dry strength of the separator of Example 20 is increased to 35 N/15mm, compared with the dry strength of Example 18 (25 N/15mm) and the dry strength of Example 19 (27 N/15mm). Similarly, the wet strength of the separator of Example 20 is also increased to 11.9 N/15mm, compared with the wet strength of Example 18 (8.8 N/15mm) and the wet strength of Example 19 (9.6 N/15mm), so that the dry strength and the wet strength are both increased. Thus, by blending 5% or less by weight of the readily-soluble PVA fibers, it is possible to not only adjust the mechanical strength of the separator to obtain physical properties of separator suitable for use, but also contribute to reduce the hydrogen gas yield.

The lyocell fibers used in Examples 18 to 25 have different fibrillation state from other cellulose fibers, such as the mercerized pulp, the linter pulp and the like. When the lyocell fibers are beaten, fine fibrils, each having a diameter of about 0.1 µm to 1 µm, will be liberated from the surface of the fibers, so that only the surface of the fibers is fibrillated, and the central portion of the fiber will not be fibrillated. Thus, even if the lyocell fibers are beaten, the density of the separator more tends to be reduced compared with pulp fibers, such as the mercerized pulp and the like. Thus, the dry strength and the wet strength of the separator using the lyocell fibers tend to decrease. Further, the electrical resistance of the separator using the lyocell fibers will become small by itself, and therefore there is a margin in electrical resistance compared with the separator using other cellulose fibers, such as the mercerized pulp and the like. Thus, even if the readily-soluble PVA fibers are blended, the electrical resistance of the separator having the lyocell fibers blended thereinto will not be largely increased as long as the content of the readily-soluble PVA fibers does not exceed 5% by weight. Thus, it is particularly suitable to blend 5% or less by weight of readily-soluble polyvinyl alcohol fibers into the separator of the present invention in which the lyocell fibers are blended.

The separator of Comparative Example 12 corresponds to a conventional separator into which 15% by weight of readily-soluble PVA fibers having a dissolution temperature of 70°C in water are blended to bind the fibers. The electrical resistance of the separator in Comparative Example 12 is 19.8 mΩ, which is largely increased compared with the electrical resistance of the separator of Example 18 (10.3 mΩ) and the electrical resistance of the separator of Example 19 (10.5 mΩ), wherein both the separator of Example 18 and the separator of Example 19 also have lyocell fibers blended thereinto. This is because the readily-soluble PVA fibers are dissolved between fibers of the separator so as to fill up the void and plug the pores of the separator, and therefore the electrical resistance of the separator of Comparative Example 12 is increased. Thus, when adding the readily-soluble PVA fibers, it is necessary to pay attention to the additive amount of the readily-soluble PVA fibers, and it is preferred that the additive amount of the readily-soluble PVA fibers does not exceed 5% by weight.

Examples 21 to 23 are separators in which the amount of the lyocell fibers beaten to 120 ml CSF blended thereinto is 50% by weight (Example 21), 80% by weight (Example 22), and 100% by weight (Example 23). Compared to the dry strength (25 N/15mm) and wet strength (8.8 N/15mm) of the separator of Example 18 (into which 60% by weight of lyocell fibers are blended), the dry strength and wet strength of the separator of Example 21 (into which 50% by weight of lyocell fibers are blended) are respectively 21 N/15mm and 6.2 N/15mm, which are lower than those of the separator of Example 18; on the other hand, the dry strength and wet strength of the separator of Example 22 (into which 80% by weight of lyocell fibers are blended) are respectively 28 N/15mm and 10.5 N/15mm, which are higher than those of the separator of Example 18. Thus, based on the data of Example 21 (into which 50% by weight of cellulose fibers are blended) and the data of Example 10 (into which 40% by weight of cellulose fibers are blended), it is judged that the amount of the cellulose fibers blended into the separator of the present invention is preferably not less than 40% by weight. If the content of the cellulose fibers (such as the lyocell fibers and the like) in the separator is reduced, the mechanical strength of the separator will decrease, so that, as described above, there is a possibility that when winding the separator into a circular tube, problems such as breaking of the separator might occur in the manufacturing process of the battery.

Example 24 is a separator in which 60% by weight of highly beaten lyocell fibers having a freeness of 50 ml CSF and 20% by weight of unbeaten lyocell fibers are mixed with each other, and further, 20% by weight of vinylon fibers are mixed with the mixed cellulose fibers, and PAE resin is added. The density and electrical resistance of the separator of Example 24 are respectively 0.322 g/cm³ and 10.2 mΩ, which are substantially equal to the density and electrical resistance of the separator of Example 18, which are respectively 0.325 g/cm³ and 10.3 mΩ; however, the airtightness of the separator of Example 24 is 28.5 sec/100ml, which is substantially twice as much as the airtightness of the separator of Example 18, which is 15.4 sec/100ml. Based on the result of Example 24, it can be known that if the unbeaten lyocell fibers are blended into the highly beaten lyocell fibers, the airtightness of the separator can be increased without increasing the density and electrical resistance of the separator. Thus, by using the highly beaten cellulose fibers and unbeaten cellulose fibers in a mixed state, not only decreasing of discharge performance of the battery caused by increasing of the electrical resistance of the separator can be avoided, but also the shielding performance of the separator can be improved, so that effect of preventing short-circuit caused by dendrite of zinc oxide of the alkaline battery can be increased.

Particularly, the unbeaten lyocell fibers have larger rigidity compared with other cellulose fibers, which is a characteristic of the unbeaten lyocell fibers. In the alkaline battery, the active material reacts with the electrolyte when the battery discharges, so that the volume of the active material of the battery increases to thereby press against the separator. When the separator is pressed, the electrolyte in the separator will become insufficient, so that the internal resistance of the battery will increase and the battery life will decrease. However, if the unbeaten lyocell fibers are blended into the separator (like the separator of Example 24), the rigidity of the separator will increase, so that the separator is less likely to be compressed in the thickness direction. Thus, since the electrolyte is less likely to be lost from the separator, and the electrolyte contained in the separator is retained for long period in the battery, the battery life can be prolonged.

Example 25 is a separator obtained by mixing 20% by weight of vinylon fibers into 80% by weight of highly beaten lyocell fibers having a freeness of 10 ml CSF, adding PAE resin, and performing paper-making process. The separator of Example 25 has an airtightness of 178 sec/100ml, which is a large value, and an electrical resistance of 9.8 mΩ, which is a relatively small value. The average pore diameter of the separator of Example 25 is 0.5 µm, which is measured by a testing method for bubble point method (JIS K3832). Considering the fact that the average pore diameter of the separator of alkaline battery currently used is 10 µm to 20 µm, even a separator having an airtightness level of Example 25, which is a separator having lyocell fibers blended thereinto, has a remarkably small average pore diameter, and has good effect of preventing short-circuit caused by dendrite. Incidentally, in the case where the airtightness of the separator is equal to or higher than 100 sec/100ml measured by the modified measuring method (like the case of Example 25), when drying the separator, the separator may be dried while pressing the separator against the surface of the dryer with a dryer felt so that the separator is held down. Thus, the wet paper can be prevented from floating from the surface of the dryer.

In the case where lyocell fibers are used as the cellulose fibers of the separator, the hydrogen gas yield of the separator using lyocell fibers tends to decrease compared with the hydrogen gas yield of the separator using mercerized pulp. For example, when comparing the separator whose main fibers are cellulose fibers and vinylon fibers, the hydrogen gas yield of Example 2 (in which mercerized pulp is used) is 240 µl/g, which is higher than the hydrogen gas yield (180 µl/g) of Example 18 (in which lyocell fibers are used). Similarly, when comparing Comparative Example 1 and Comparative Example 10 (both having no PAE resin added therein) with each other, the hydrogen gas yield of Comparative Example 10 (in which lyocell fibers are used) is 160 µl/g, while the hydrogen gas yield of Comparative Example 1 (in which mercerized pulp is used) is 190 µl/g; thus, it can be known that it is possible to obtain a separator with lower hydrogen gas yield by using lyocell fibers. Incidentally, the hydrogen gas generated in the alkaline battery is partially leaked out from the battery through the resin sealing body, instead of being completely sealed within the battery. Thus, the hydrogen gas yield 300 µl/g of Example 3 (which is the largest hydrogen gas yield among all Examples of the present invention) falls within the acceptable range of the hydrogen gas yield.

It is presumed that, as described above, the reason why the hydrogen gas yield varies depending on the type of the cellulose fiber is associated with impurities contained in the cellulose fibers. Lyocell fibers are regenerated cellulose fibers, and are regenerated fibers obtained by dissolving pulp and then spinning fibers from the solution of the pulp. Thus, it is considered that compared to the mercerized pulp, the lyocell fibers have less impurities contained therein.

Based on these facts, compared with the separator using the mercerized pulp, the separator using the lyocell fibers has smaller density, smaller electrical resistance, and lower hydrogen gas yield; therefore, when using lyocell fiber as the cellulose fibers of the separator of the present invention, it is possible to obtain a separator with smaller resistance and lower hydrogen gas yield and particularly suitable for heavy load discharge of the battery.

Examples 26 to 29 are examples in which other cellulose fibers than mercerized pulp and lyocell fibers are blended thereinto; and in Example 29, nylon-6 fibers are blended as the synthetic fibers. Even in the cases where other cellulose fibers are blended thereinto, the separator can obtain sufficient wet strength by adding PAE resin.

Incidentally, as can be known from Tables 4 to 7, in each example and each comparative example, there is no significant difference between the blending ratio of the cellulose fibers and the polyvinyl alcohol fibers when blending raw material and the content of the cellulose fibers and the polyvinyl alcohol fibers after performing paper-making process. Based on this fact, the content of the cellulose fibers and the polyvinyl alcohol fibers after performing paper-making process can be regarded as equal to the blending ratio of the cellulose fibers and the polyvinyl alcohol fibers.

Next, separators suitable to comparison of the wet strength were selected from the aforesaid examples and comparative examples, and immersed in aqueous solution of 40% aqueous solution of KOH at room temperature for 10 days, and then the wet strengths of these immersed separators were measured. Table 8 shows the results of the measured wet strengths and the results of the transportation tests of the alkaline manganese batteries manufactured using these separators.

**[Table 8]**

| Separator | Cellulose fiber | | | Synthetic fiber | | Added resin | | Wet strength | Wet strength immersed in K0H for 10 days) | Result of transportation test |
|---|---|---|---|---|---|---|---|---|---|---|
| | Type | CSF (ml) | % | Type | % | Type | % | N/15mm | N/15m | % |
| Example1 | Mercerized pulp | 100 | 50 | Vinylon fiber | 50 | PAE | 0.05 | 6.0 | 5.7 | O |
| Example2 | Mercerized pulp | 100 | 50 | Vinylon fiber | 50 | PAE | 0.15 | 10.6 | 10.5 | O |
| Example3 | Mercerized pulp | 100 | 50 | Vinylon fiber | 50 | PAE | 0.50 | 17.9 | 17.8 | O |
| Example4 | Mercerized pulp | 100 | 50 | Vinylon fiber | 45 | PAE | 0.15 | 11.1 | 11.1 | O |
| | | | | PVA fiber(99°C) | 5 | | | | | |
| Example5 | Mercerized pulp | 100 | 50 | Vinylon fiber | 25 | PAE | 0.15 | 11.5 | 11.4 | O |
| | | | | PVA fiber(99°C) | 25 | | | | | |
| Example6 | Mercerized pulp | 100 | 50 | Vinylon fiber | 10 | PAE | 0.15 | 11.7 | 11.5 | O |
| | | | | PVA fiber(99°C) | 40 | | | | | |
| Example7 | Mercerized pulp | 50 | 50 | Vinylon fiber | 50 | PAE | 0.15 | 12.3 | 12.2 | O |
| Example9 | Mercerized pulp | 480 | 50 | Vinylon fiber | 50 | PAE | 0.15 | 6.2 | 6.0 | O |
| Example10 | Mercerized pulp | 100 | 40 | Vinylon fiber | 60 | PAE | 0.15 | 8.3 | 8.5 | O |
| Exemple12 | Mercerized pulp | 100 | 100 | none | 0 | PAE | 0.15 | 13.4 | 13.5 | O |
| Comparison1 | Mercerized pulp | 100 | 50 | Vinylon fiber | 50 | none | 0 | 1.5 | 0.8 | × |
| Comparison2 | Mercerized pulp | 100 | 50 | Vinylon fiber | 50 | PAE | 0.02 | 2.0 | 2.0 | × |
| Comparison3 | Mercerized pulp | 100 | 50 | Vinylon fiber | 50 | PAE | 0.70 | 21.0 | 20.2 | O |
| Comparison4 | Mercerized pulp | 100 | 50 | Vinylon fiber | 50 | PAPAE | 0.15 | 8.1 | 1.0 | × |
| Comparison5 | Mercerized pulp | 100 | 50 | Vinylon fiber | 50 | PAPAE | 0.50 | 14.0 | 1.3 | × |
| Comparison6 | Mercerized pulp | 100 | 50 | Vinylon fiber | 40 | none | 0 | 11.3 | 10.8 | O |
| | | | | PVA A fiber(70°C) | 10 | | | | | |
| Example13 | Mercerized pulp | 0 | 70 | Vinylon fiber | 30 | PAE | 0.12 | 9.5 | 9.5 | O |
| Example 14 | Mercerized pulp | 0 | 70 | Vinylon fiber | 20 | PAE | 0.12 | 9.7 | 9.6 | O |
| | | | | PVA fiber(>1 00°C) | 10 | | | | | |
| Example15 | Mercerized pulp | 0 | 70 | Vinylon fiber | 15 | PAE | 0.12 | 10.2 | 9.8 | O |
| | | | | PVA fiber(> 100°C) | 15 | | | | | |
| Example17 | Mercerized pulp | 0 | 85 | Vinylon fiber | 15 | PAE | 0.26 | 12.0 | 12.5 | O |
| Comparison7 | Mercerized pulp | 0 | 70 | Vinylon fiber | 20 | none | 0 | 1.5 | 0.8 | x |
| | | | | PVA fiber(>1 00°C) | 10 | | | | | |
| Comparison8 | Mercerized pulp | 0 | 70 | Vinylon fiber | 20 | PAPAE | 0.12 | 6.5 | 1.0 | × |
| | | | | PVA fiber(>100°C) | 10 | | | | | |
| Comparison9 | Mercerized pulp | 0 | 70 | Vinylon fiber | 20 | none | 0 | 10.1 | 9.5 | - |
| | | | | PVA fiber(80°C) | 10 | | | | | |
| Example18 | Lyocell fiber | 120 | 60 | Vinylon fiber | 40 | PAE | 0.25 | 8.8 | 8.7 | O |
| Example19 | Lyocell fiber | 120 | 60 | Vinylon fiber | 25 | PAE | 0.25 | 9.6 | 9.8 | O |
| | | | | PVA fiber(99°C) | 15 | | | | | |
| Example20 | Lyocell fiber | 120 | 60 | Vinylon fiber | 35 | PAE | 0.25 | 11.9 | 12.2 | O |
| | | | | PVA fiber(70°C) | 5 | | | | | |
| Example21 | LyoceU fiber | 120 | 50 | Vinylon fiber | 50 | PAE | 0.25 | 6.2 | 6.0 | O |
| Example23 | Lyocell fiber | 120 | 100 | none | 0 | PAE | 0.25 | 10.8 | 10.6 | O |
| Example24 | Lyocell fiber | 50 | 60 | Vinylon fiber | 20 | PAE | 0.25 | 9.6 | 9.5 | O |
| | Lyocell fiber | unbeaten | 20 | | | | | | | |
| Exemple25 | Lyocell fiber | 10 | 80 | Vinylon fiber | 20 | PAE | 0.20 | 7.5 | 7.6 | O |
| Comparison10 | Lyocell fiber | 120 | 60 | Vinylon fiber | 40 | none | 0 | 1.0 | 0.6 | × |
| Comparison11 | Lyocell fiber | 120 | 60 | Vinylon fiber | 25 | PAPAE | 0.25 | 7.6 | 0.8 | × |
| | | | | PVA fiber(99°C) | 15 | | | | | |
| Comparison12 | Lyocell fiber | 120 | 60 | Vinylon fiber | 25 | none | 0 | 10.1 | 9.5 | O |
| | | | | PVA fiber(70°C) | 15 | | | | | |
| Example26 | Mercerized pulp | 100 | 60 | Vinylon fiber | 20 | PAE | 0.20 | 12.3 | 12.5 | O |
| | Rayon fiber | unbeaten | 20 | | | | | | | |
| Example27 | Linter pulp | 150 | 65 | Vinylon fiber | 35 | PAE | 0.10 | 11.3 | 10.9 | O |
| Example 28 | Lyocell fiber | 300 | 20 | Vinylon fiber | 30 | PAE | 0.40 | 12.1 | 12.2 | O |
| | High alpha LBKP | | 40 | PVA fiber(99°C) | 10 | | | | | |
| Example29 | Mercerized pulp | 250 | 30 | Vinylon fiber | 30 | PAE | 0.20 | 14.2 | 14.0 | O |
| | Lyocell fiber | | 20 | Nyron-6 fiber | 17 | | | | | |
| | | | | PVA fiber(70°C) | 3 | | | | | |

| | | | | | | | | | | |
|---|---|---|---|---|---|---|---|---|---|---|
| PAE : polyamine-epichlorohydrin resin PAPAE : polyamide-polyamine-epichlorohydrin resin PVA fiber : polyvinyl alcohol fiber, ( ) represents dissolution temperature in water. | | | | | | | | | | |

As shown in Table 8, in Comparative Examples 4, 5, 8, 11 in which PAPAE resin is added, the wet strengths measured after the separators have been immersed in 40% aqueous solution of KOH for 10 days are extremely reduced compared with the wet strengths measured immediately after the separators have been immersed in 40% aqueous solution. In other words, the wet strength measured after the separator has been immersed in 40% aqueous solution of KOH for 10 days is extremely reduced from 8.1 N/15mm to 1.0 N/15mm in Comparative Example 4, from 14.0 N/15mm to 1.3 N/15mm in Comparative Example 5, from 6.5 N/15mm to 1.0 N/15mm in Comparative Example 8, and from 7.6 N/15mm to 0.8 N/15mm in Comparative Example 11. The values of the wet strengths measured after the separator have been immersed in 40% aqueous solution of KOH for 10 days are equivalent to the values of the initial wet strengths 1.5 N/15mm, 1.0 N/15mm of Comparative Examples 1, 7, 10, in which readily-soluble PVA fibers and PAE resin are not added at all.

Thus, if the separator has been immersed in the strong alkaline electrolyte (which comprises a 30% to 40% aqueous solution of potassium hydroxide) used in the alkaline battery for long time, the amide group of the PAPAE resin will be gradually hydrolyzed, so that the wet strength of the separator will decrease; therefore, the alkali-resistant of PAPAE resin is not always sufficient, and is not suitable to be used as a separator for alkaline battery.

In contrast, it is known that, in each of the separators according to the aforesaid examples of the present invention in which PAE resin is added, the initial wet strength is maintained, and the wet strength is almost unchanged when being immersed in the strong alkaline electrolyte of 40% aqueous solution of KOH. For example, in Example 1, the initial wet strength of the separator is 6.0 N/15mm, while the wet strength after the separator has been immersed in 40% aqueous solution of KOH for 10 days is 5.7 N/15mm, which is almost not reduced compared with the initial wet strength. Thus, PAE resin has sufficient alkali-resistant even if it is been immersed in the strong alkaline electrolyte (which comprises a 30% to 40% aqueous solution of potassium hydroxide) used in the alkaline battery for long time. Thus, PAE resin is suitable to be applied to a separator for alkaline battery.

Further, in Comparative Examples 6, 9, 12, which are conventional examples in which readily-soluble PVA fibers are blended, the wet strengths after the separators have been immersed in 40% aqueous solution of KOH for 10 days are slightly reduced. To be specific, the wet strength after the separator has been immersed in 40% aqueous solution of KOH for 10 days is slightly reduced from 11.3 N/15mm to 10.8 N/15mm in Comparative Example 6, and from 10.1 N/15mm to 9.5 N/15mm in Comparative Examples 9, 12; so that in Comparative Examples 6, 9, 12, the wet strengths equivalent to those of the examples are maintained.

Next, 20 AA alkaline manganese batteries (LR-6) shown in FIG. 1 were produced in which the positive electrode active material and the negative electrode active material of the batteries were separated from each other using the separators according to the Examples and Comparative Examples described in Table 8. As shown in FIG. 1, reference numeral 1 represents an alkaline manganese battery, reference numeral 2 represents a bottomed tubular positive electrode can, and a positive electrode terminal 2a is formed on one end portion. A positive electrode mixture 3 is pressed into the positive electrode can 2, wherein the positive electrode mixture 3 has a cylindrical tube shape and is formed of manganese dioxide and graphite. Reference numeral 4 represents a separator according to the present invention which is wound into tubular shape. A gel-like negative electrode 5 is filled into the tubular separator 4, wherein the gel-like negative electrode 5 is formed by dispersing and mixing mercury-unadded zinc alloy powder into a gel-like electrolyte. Reference numeral 6 represents a negative electrode current collector, and reference numeral 7 represents a resin sealing body that blocks opening of the positive electrode can 1. In the resin sealing body 7, a negative electrode terminal board 8 (which also serves as a negative electrode terminal) is welded to the head porion of the negative electrode current collector 6. The positive electrode terminal side of the tubular separator 4 is sealed by a bottom paper 9, so that the gel-like negative electrode 5 is prevented from being contacted by the positive electrode can 2. Reference numeral 10 represents a resin cladding that is closely wrapped on the outer periphery of the positive electrode can 2 with the positive electrode terminal 2a and the negative electrode terminal board 8 exposed. [0168]
To be specific, the alkaline manganese battery is produced by the following method. First, each separator was wound to form a separator tube, the separator tube was brought into close contact with the inner wall of the positive electrode tube, the electrolyte was filled, and then the negative electrode gel was filled until reaching a predetermined position, the resin sealing body having the negative electrode current collector mounted thereto was inserted, and the end of the positive electrode can was swaged so as to be fixed. By performing the aforesaid steps, an alkaline manganese battery was produced. Since the separators of Examples 13 to 17 and Comparative Examples 7 and 8 have large airtightness and excellent shielding performance, the number of windings of these separators is 2, and the number of windings of other separators is 3. Incidentally, since the separator of Comparative Example 9 was bound to the dryer and/or the dryer felt when performing the paper-making process and therefore could not obtain a continuous sheet, it was not possible to produce a battery with the separator of Comparative Example 9.

Further, transportation test was performed on the produced alkaline manganese batteries. The transportation test was performed by leaving the alkaline manganese batteries as they were for one week from the time when the batteries were produced, then loading the batteries on a truck in boxed state, and transporting the batteries for a section of about 1000 km. After the transportation, the batteries were left as they were for one week, then open-circuit voltage was measured for each of the alkaline manganese batteries. The alkaline manganese battery whose voltage is dropped to 1.5 V or lower is regarded as bad battery, and the separator of each example and each comparative example used in batteries in which bad battery was found was checked. Incidentally, the open-circuit voltages of the alkaline manganese batteries measured immediately after production were all 1.6 V or higher. In Table 8, the separator that no bad battery caused by the transportation test was found was indicated by mark "O", and the separator that at least one bad battery was found was indicated by mark "×".

Based on the results of the transportation test shown in Table 8, it can be known that bad batteries were found among the batteries using the separators whose wet strengths measured after the separators had been immersed in 40% aqueous solution of KOH for 10 days were reduced; while no bad battery was found among the alkaline manganese batteries using the separator of each of the examples according to the present invention, and no bad battery was found among the alkaline manganese batteries using the separator of Comparative Example 6 and 12 in which readily-soluble PVA fibers were blended. Incidentally, after disassembling and checking the bad batteries with dropped voltage, it was found that there were breaks and cracks in the end portion of the separator fixed by the resin sealing body, and that the negative electrode gel filled into the separator was spilt to the side of positive electrode to cause a short-circuited portion. It is known based on these results that, if the wet strength of the separator of the present invention is equal to higher than 5 N/15mm, internal short-circuit can be prevented even if the battery is subjected to impact caused by transportation and the like.

Next, at room temperature, discharge duration was measured for the alkaline manganese batteries of every examples and the alkaline manganese batteries of Comparative Example 3, 6, 12 shown in Table 8, in which no bad battery was caused by the transportation test, wherein the discharge duration was measured at a constant current of 1000 mA and an end voltage to 1.0 V. Incidentally, since the basis weight of the separator of Example 27 is 45.2g/m², which is larger than that of the other separators, the discharge test was not performed on the separator of Example 27.

The results of the discharge test are shown in Table 9. Incidentally, when performing the discharge test on the alkaline manganese battery using the separator of Comparative Example 3, since it was found that the safety valve of the resin sealing body was open and the electrolyte was slightly leaked, the discharge test was not performed on the battery of Comparative Example 3. Since the content of PAE resin of the separator of Comparative Example 3 is large up to 0.7 % by weight, the hydrogen gas yield is also high up to 410 µl/g. Thus, the inner pressure of the battery increases, so that the safety valve is caused to operate. On the other hand, as shown in Table 9, since the wet strength of the battery produced using the separator of Comparative Example 2 (whose content of PAE resin is a small value of 0.02% by weight) is 2.0 N/15mm, which is a small value, the bad battery was caused in the transportation test. Thus, it is preferred that the content of PAE resin added in the separator of the present invention is in a range of 0.05% by weight to 0.5% by weight. Incidentally, no leakage of the electrolyte was found for all batteries using the separators described in Table 9 except for the battery using the separator of Comparative Example 3.

**[Table 9]**

| Separator | Cellulose fiber | | | Synthetic fiber | | Added resin | | Thickness | Basis weight | Density | Airtightness | | Electrical resistance | Charge time |
|---|---|---|---|---|---|---|---|---|---|---|---|---|---|---|
| | Type | CSF (ml) | % | Type | % | Type | % | *µ*m | g/cm² | g/cm³ | Basic measuring method (Minute/100ml) | Modified measuring method(sec/100ml) | mΩ | Minute |
| Example1 | Mercerized pulp | 100 | 50 | Vinylon fiber | 50 | PAE | 0.05 | 70.0 | 33.0 | 0.471 | | 30 | 17.2 | 31 |
| Example2 | Mercerized pulp | 100 | 50 | Vinylon fiber | 50 | PAE | 0.15 | 70.5 | 33.2 | 0.471 | | 33 | 17.8 | 31 |
| Example3 | Mercerized pulp | 100 | 50 | Vinylon fiber | 50 | PAE | 0.50 | 70.2 | 33.8 | 0.481 | | 37 | 18.6 | 29 |
| Example4 | Mercerized pulp | 100 | 50 | Vinylon fiber | 45 | PAE | 0.15 | 70.7 | 33.0 | 0.467 | | 33 | 17.5 | 31 |
| | | | | PVA fiber(99°C) | 5 | | | | | | | | | |
| Example5 | Mercerized pulp | 100 | 50 | Vinylon fiber | 25 | PAE | 0.15 | 70.1 | 33.1 | 0.472 | | 32 | 17.6 | 32 |
| | | | | PVA fiber(99°C) | 25 | | | | | | | | | |
| Example6 | Mercerized pulp | 100 | 50 | Vinylon fiber | 10 | PAE | 0.15 | 69.3 | 33.2 | 0.479 | | 35 | 17.8 | 31 |
| | | | | PVA fiber(99°C) | 40 | | | | | | | | | |
| Example7 | Mercerized pulp | 50 | 50 | Vinylon fiber | 50 | PAE | 0.15 | 66.1 | 33.6 | 0.508 | | 45 | 18.8 | 29 |
| Example9 | Mercerized pulp | 480 | 50 | Vinylon fiber | 50 | PAE | 0.15 | 98.0 | 33.0 | 0.337 | | 3.2 | 14.6 | 32 |
| Example10 | Mercerized pulp | 100 | 40 | Vinylon fiber | 60 | PAE | 0.15 | 76.2 | 33.2 | 0.436 | | 15 | 15.7 | 32 |
| Example12 | Mercerized pulp | 100 | 100 | none | 0 | PAE | 0.15 | 58.4 | 33.2 | 0.568 | | 86 | 20.1 | 31 |
| Comparison3 | Mercerized pulp | 100 | 50 | Vinylon fiber | 50 | PAE | 0.70 | 69.5 | 33.6 | 0.483 | | 40 | 20.8 | Unmeasurable |
| Oomparison6 | Mercerized pulp | 100 | 50 | Vinylon fiber | 40 | none | 0 | 63.5 | 33.3 | 0.524 | | 82 | 27.2 | 25 |
| | | | | PVA fiber(70°C) | 10 | | | | | | | | | |
| Example13 | Mercerized pulp | 0 | | 701 Vinylon fiber | 30 | PAE | 0.12 | 60.2 | 37.5 | 0.623 | 40.0 | | 27.0 | 32 |
| Example14 | Mercerized pulp | 0 | 70 | Vinylon fiber | 20 | PAE | 0.12 | 59.8 | 37.1 | 0.620 | 38.1 | | 27.2 | 32 |
| | | | | PVA fiber(>100°C) | 10 | | | | | | | | | |
| Example15 | Mercerized pulp | 0 | 70 | Vinylon fiber | 15 | PAE | 0.12 | 60.0 | 36.5 | 0.608 | 35.2 | | 27.0 | 32 |
| | | | | PVA fiber(>100°C) | 15 | | | | | | | | | |
| Example17 | Mercerized pulp | 0 | 85 | Vinylon fiber | 15 | PAE | 0.26 | 49.6 | 33.2 | 0.669 | 210.0 | | 25.0 | 34 |
| Example18 | Lyocell fiber | 120 | 60 | Vinylon fiber | 40 | PAE | 0.25 | 100.6 | 32.7 | 0.325 | | 15.4 | 10.3 | 35 |
| Example19 | Lyocell fiber | 120 | 60 | Vinylon fiber | 25 | PAE | 0.25 | 100.5 | 33.1 | 0.329 | | 15.6 | 10.5 | 35 |
| | | | | PVA fiber(99°C) | 15 | | | | | | | | | |
| Example20 | Lyocell fiber | 120 | 60 | Vinylon fiber | 35 | PAE | 0.25 | 95.4 | 33.0 | 0.348 | | 17.1 | 12.8 | 34 |
| | | | | PVA fiber(70°C) | 6 | | | | | | | | | |
| Example21 | Lyocell fiber | 120 | 50 | Vinylon fiber | 50 | PAE | 0.25 | 107.1 | 33.1 | 0.309 | | 10.4 | 9.3 | 36 |
| Example23 | Lyocell fiber | 120 | 100 | none | 0 | PAE | 0.25 | 78.9 | 33.2 | 0.421 | | 65.6 | 11.8 | 35 |
| Example24 | Lyocell fiber | 50 | 60 | Vinylon fiber | 20 | PAE | 0.25 | 100.2 | 32.3 | 0.322 | | 28.5 | 10.2 | 37 |
| | Lyocell fiber | unbeaten | 20 | | | | | | | | | | | |
| Example25 | Lyocell fiber | 10 | 80 | Vinylon fiber | 20 | PAE | 0.25 | 51.0 | 26.0 | 0.510 | | 178 | 9.8 | 37 |
| Comparison12 | Lyocell fiber | 120 | 60 | Vinylon fiber | 25 | none | 0 | 90.5 | 32.8 | 0.362 | | 28.6 | 19.8 | 27 |
| | | | | PVA fiber(70°C) | 15 | | | | | | | | | |
| Example26 | Mercerized pulp; | 100 | 60 | Vinylon fiber | 20 | PAE | 0.20 | 61.2 | 33.3 | 0.410 | | 15.8 | 16.2 | 33 |
| | Rayon fiber | unbeaten | 20 | | | | | | | | | | | |
| Example28 | Lyocell fiber | 300 | 20 | Vinylon fiber | 30 | PAE | 0.40 | 95.3 | 36.7 | 0.385 | | 12.3 | 15.0 | 31 |
| | High alpha LBKP | | 40 | PVA fiber(99°C) | 10 | | | | | | | | | |
| Example29 | Mercerized pulp | 250 | 30 | Vinylon fiber | 30 | PAE | 0.20 | 92.3 | 33.2 | 0.360 | | 8.5 | 14.8 | 32 |
| | Lyocell fiber | | 20 | Nyron-6 fiber | 17 | | | | | | | | | |
| | | | | PVA fiber(70°C) | 3 | | | | | | | | | |

| | | | | | | | | | | | | | | |
|---|---|---|---|---|---|---|---|---|---|---|---|---|---|---|
| PAE polyamine-epichlorohydrin resin PAPAE : polyamide-polyamine-epichlorohydrin resin pVA fiber : polyvinyl alcohol fiber; ( ) represents dissolution temperature in water. | | | | | | | | | | | | | | |

Compared to the discharge duration of 25 minutes of the conventional separator of Comparative Example 6 and the discharge duration of 27 minutes of the conventional separator of Comparative Example 12, into which readily-soluble PVA fibers were blended as binder, the discharge duration of the separators of every examples of the present invention were large values of 29 minutes (Example 3) to 37 minutes (Example 25), so that it is known that a battery suitable to perform heavy load discharge can be obtained by using a separator according to the present invention. Particularly, the discharge duration of the batteries (see Table 9) using the separators of Examples 18 to 25, in which lyocell fibers were used as the cellulose fibers, were long up to 34 minutes (Example 20) to 37 minutes (Example 25), so that a battery particularly suitable to perform heavy load discharge can be obtained by using a separator using cellulose fibers according to the present invention.

### Industrial applicability

With the separator for alkaline battery and the alkaline battery obtained according to the present invention, by using a separator that contains 40% by weight of cellulose fibers and 0.05% to 0.5% by weight of PAE resin (i.e., polyamine-epichlorohydrin resin) in terms of resin solid content as the separator of alkaline battery, the separator can obtain necessary wet strength without using the polyvinyl alcohol fibers as a binder. Further, since the polyvinyl alcohol fibers (as binder) do not dissolve so as to fill up the void between the fibers of the separator, the electrical resistance of the separator can be reduced. Further, since only low content of the polyamine-epichlorohydrin resin is required, the hydrogen gas yield caused by the corrosion of the mercury-unadded zinc alloy negative electrode can be reduced to a level that does not hinder to use the separator as a separator for alkaline battery.

Further, by using PAE resin in combination either with 40% or less by weight of poorly-soluble PVA fibers (i.e., poorly-soluble polyvinyl alcohol fibers) whose dissolution temperature in water is 95°C or higher or with 5% or less by weight of readily-soluble PVA fibers (i.e., readily-soluble polyvinyl alcohol fibers) whose dissolution temperature in water is 60°C to 90°C, it is possible to bind the intersection points of the fibers to each other by PAE resin without filling up the void between fibers, and reduce the hydrogen gas yield caused by adding PAE resin to lower level by adding poorly-soluble PVA fibers that less dissolve at the heating temperature of the paper-making process. Thus, it is possible to reduce the hydrogen gas yield caused by adding PAE resin, obtain wet strength necessary for the separator, and effectively reduce the electrical resistance of the separator.

Further, by adding the alkali-resistant synthetic fibers, in addition to beating the cellulose fibers to 500 ml to 0 ml CSF, it is possible to obtain a separator having homogeneous texture and excellent alkali-resistance. As a result, with an alkaline battery that uses the separator of the present invention, the internal resistance can be reduced, and the heavy load discharge performance can be improved.

### Explanation of Reference Numerals

| | |
|---|---|
| 1 | alkaline manganese battery |
| 2 | positive electrode can |
| 2a | positive electrode terminal |
| 3 | positive electrode mixture |
| 4 | separator |
| 5 | gel-like negative electrode |
| 6 | negative electrode current collector |
| 7 | resin sealing body |
| 8 | negative electrode terminal board |
| 9 | bottom paper |
| 10 | resin cladding |

## Claims

1. A separator for alkaline battery for separating a positive electrode active material and a negative electrode active material from each other in an alkaline battery, containing:
40% by weight of cellulose fibers; and
0.05% to 0.5% by weight of polyamine-epichlorohydrin resin in terms of resin solid content.

2. The separator for alkaline battery according to claim 1, further containing alkali-resistant synthetic fibers.

3. The separator for alkaline battery according to claim 2 containing, as the alkali-resistant synthetic fibers, 40% or less by weight of poorly-soluble polyvinyl alcohol fibers whose dissolution temperature in water is 95°C or higher.

4. The separator for alkaline battery according to claim 2 containing, as the alkali-resistant synthetic fibers, 5% or less by weight of readily-soluble polyvinyl alcohol fibers whose dissolution temperature in water is 60°C to 90°C.

5. The separator for alkaline battery according to any one of claims 1 to 3, wherein mercerized pulp is used as the cellulose fibers.

6. The separator for alkaline battery according to any one of claims 1 to 3, wherein lyocell fibers are used as the cellulose fibers.

7. The separator for alkaline battery according to any one of claims 1 to 5, wherein cellulose fibers beaten to 500ml to 0ml CSF are used as the cellulose fibers.

8. The separator for alkaline battery according to any one of claims 1 to 7, wherein the separator has a wet strength of 5 N/15mm to 20 N/15mm.

9. An alkaline battery whose positive electrode active material and negative electrode active material are separated from each other by a separator,
wherein the separator is the same as the separator for alkaline battery described in any one of claims 1 to 8.
